(19) Europäisches Patentamt / European Patent Office / Office européen des brevets

(11) EP 3 015 897 A1

(12) EUROPEAN PATENT APPLICATION

(43) Date of publication:
04.05.2016 Bulletin 2016/18

(51) Int Cl.:
G02B 13/24 (2006.01)

(21) Application number: 15190565.0

(22) Date of filing: 20.10.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 31.10.2014 JP 2014223123

(71) Applicant: Konica Minolta, Inc.
Tokyo 100-7015 (JP)

(72) Inventor: Tanaka, Hiroaki
Tokyo 100-7015 (JP)

(74) Representative: Hoffmann Eitle
Patent- und Rechtsanwälte PartmbB
Arabellastraße 30
81925 München (DE)

(54) MACRO LENS SYSTEM, IMAGING OPTICAL DEVICE, AND DIGITAL APPLIANCE

(57) A macro lens system has, from the object side, a first lens group; a second, positive, lens group; and a third, negative, lens group. Focusing from an object at infinity to an object at a close distance is achieved by moving only the second lens group toward the object side along the optical axis while keeping the first and third lens groups stationary, and the conditional formulae $\beta \leq -0.45$ ($\beta$ representing the lateral magnification with focus on the closest object) and $0.4 < f2 / f < 0.68$ (f2 representing the focal length of the second lens group, f representing the focal length of the macro lens system as a whole with focus on an object at infinity) are fulfilled.

FIG.1

EX1-POS1

**Description**

**BACKGROUND OF THE INVENTION**

1. Field of the Invention

The present invention relates to macro lens systems, imaging optical devices, and digital appliances. More particularly, the present invention relates to macro lens systems of an inner focus type that are capable of close-up photography; imaging optical devices that output, in the form of an electrical signal, an image of a subject acquired through such a macro lens system combined with an image sensor; and digital appliances, such as digital cameras, equipped with an image input function by incorporating such an imaging optical device.

2. Description of Related Art

Patent Documents 1 to 3 identified below propose imaging optical systems suitable for macro lens systems capable of close-up photography:

Patent Document 1: Japanese Patent Application Published No. 2011-180226
Patent Document 2: Japanese Patent Application Published No. 2008-257088
Patent Document 3: Japanese Patent Application Published No. 2011-048232

A macro lens system allows photography up to a high magnification such as unity magnification, and is generally used over a wide focusing range from an object at infinity to an object at a close distance. This requires satisfactory aberration correction over the wide focusing range. To this end, for example, Patent Documents 1 and 3 adopt a so-called floating design in which a plurality of lens groups are moved for focusing. On the other hand, Patent Document 2 adopts, instead of a floating design, a design in which only one lens group is moved for focusing.

Adopting a floating design as disclosed in Patent Documents 1 and 3 helps suppress variation of aberrations comparatively well over a wide focusing range. However, moving a plurality of lens groups requires a complicated mechanism. Moreover, moving a plurality of lens groups involves increased factors for production errors, leaving concern for production stability. Patent Document 2, where only one lens group is moved for focusing, helps alleviate the concern for production stability. However, for satisfactory aberration correction over a wide focusing range, the lens group that is moved for focusing needs to include a large number of lens elements, and this makes quick focusing impossible.

On the other hand, with modern digital cameras, automatic focusing is used not only in the shooting of still images but also in the shooting of moving images. In the shooting of a moving image, focus needs to be kept on a moving object; to achieve that, a lens group for focusing is oscillated at high speed (wobbled) and is moved so as to constantly seek the maximum contrast. An increased weight of the focusing lens group means an increased load on an actuator; this makes quiet operation difficult, causing the driving noise of the actuator to be recorded during moving image shooting, thus disturbing moving image shooting. Also, today, demand is high for compact imaging systems as a whole.

**SUMMARY OF THE INVENTION**

Against the background discussed above, an object of the present invention is to provide a macro lens system in which only one lens group is moved for focusing to achieve weight reduction and in addition it is moved across a reduced stroke to achieve compactness in the imaging system as a whole and in which variation of aberrations is suppressed over a wide focusing range, and to provide an imaging optical device and a digital appliance incorporating such a macro lens system.

According to one aspect of the present invention, a macro lens system includes, from the object side, a first lens group, a second lens group having a positive refractive power as a whole, and a third lens group having a negative refractive power as a whole. Here, focusing from an object at infinity to an object at a close distance is achieved by moving only the second lens group toward the object side along the optical axis while keeping the first and third lens groups stationary. Moreover, conditional formulae (1) and (2) below are fulfilled:

$$\beta \leq -0.45 \qquad (1)$$

$$0.4 < f2 / f < 0.68 \qquad (2)$$

where

β    represents the lateral magnification with focus on the closest object;

f2   represents the focal length of the second lens group; and

f    represents the focal length of the macro lens system as a whole with focus on an object at infinity.

According to another aspect of the present invention, an imaging optical device includes a macro lens system as described above and an image sensor for converting an optical image formed on the light-receiving surface thereof into an electrical signal. Here, the macro lens system is arranged such that an optical image of a subject is formed on the light-receiving surface of the image sensor.

According to yet another aspect of the present invention, a digital appliance includes an imaging optical device as described above so as to be additionally provided with at least one of a function of shooting a still image of the subject or a function of shooting a moving image of the subject.

**BRIEF DESCRIPTION OF THE DRAWINGS**

Fig. 1 is a lens construction diagram of a first embodiment (Example 1) of the present invention;
Fig. 2 is a lens construction diagram of a second embodiment (Example 2) of the present invention;
Fig. 3 is a lens construction diagram of a third embodiment (Example 3) of the present invention;
Fig. 4 is a lens construction diagram of a fourth embodiment (Example 4) of the present invention;
Fig. 5 is a lens construction diagram of a fifth embodiment (Example 5) of the present invention;
Fig. 6 is a lens construction diagram of a sixth embodiment (Example 6) of the present invention;
Fig. 7 is a lens construction diagram of a seventh embodiment (Example 7) of the present invention;
Fig. 8 is a lens construction diagram of an eighth embodiment (Example 8) of the present invention;
Fig. 9 is a lens construction diagram of a ninth embodiment (Example 9) of the present invention;
Fig. 10 is a lens construction diagram of a tenth embodiment (Example 10) of the present invention;
Fig. 11 is a lens construction diagram of an eleventh embodiment (Example 11) of the present invention;
Figs. 12A to 12F are longitudinal aberration diagrams of Example 1;
Figs. 13A to 13F are longitudinal aberration diagrams of Example 2;
Figs. 14A to 14F are longitudinal aberration diagrams of Example 3;
Figs. 15A to 15F are longitudinal aberration diagrams of Example 4;
Figs. 16A to 16F are longitudinal aberration diagrams of Example 5;
Figs. 17A to 17F are longitudinal aberration diagrams of Example 6;
Figs. 18A to 18F are longitudinal aberration diagrams of Example 7;
Figs. 19A to 19F are longitudinal aberration diagrams of Example 8;
Figs. 20A to 20F are longitudinal aberration diagrams of Example 9;
Figs. 21A to 21F are longitudinal aberration diagrams of Example 10;
Figs. 22A to 22F are longitudinal aberration diagrams of Example 11;
Figs. 23A to 23H are lateral aberration diagrams, at the first focus position, of Example 1;
Figs. 24A to 24H are lateral aberration diagrams, at the second focus position, of Example 1;
Figs. 25A to 25H are lateral aberration diagrams, at the first focus position, of Example 2;
Figs. 26A to 26H are lateral aberration diagrams, at the second focus position, of Example 2;
Figs. 27A to 27H are lateral aberration diagrams, at the first focus position, of Example 3;
Figs. 28A to 28H are lateral aberration diagrams, at the second focus position, of Example 3;
Figs. 29A to 29H are lateral aberration diagrams, at the first focus position, of Example 4;
Figs. 30A to 30H are lateral aberration diagrams, at the second focus position, of Example 4;
Figs. 31A to 31H are lateral aberration diagrams, at the first focus position, of Example 5;
Figs. 32A to 32H are lateral aberration diagrams, at the second focus position, of Example 5;
Figs. 33A to 33H are lateral aberration diagrams, at the first focus position, of Example 6;
Figs. 34A to 34H are lateral aberration diagrams, at the second focus position, of Example 6;
Figs. 35A to 35H are lateral aberration diagrams, at the first focus position, of Example 7;
Figs. 36A to 36H are lateral aberration diagrams, at the second focus position, of Example 7;

Figs. 37A to 37H are lateral aberration diagrams, at the first focus position, of Example 8;
Figs. 38A to 38H are lateral aberration diagrams, at the second focus position, of Example 8;
Figs. 39A to 39H are lateral aberration diagrams, at the first focus position, of Example 9;
Figs. 40A to 40H are lateral aberration diagrams, at the second focus position, of Example 9;
Figs. 41A to 41H are lateral aberration diagrams, at the first focus position, of Example 10;
Figs. 42A to 42H are lateral aberration diagrams, at the second focus position, of Example 10;
Figs. 43A to 43H are lateral aberration diagrams, at the first focus position, of Example 11;
Figs. 44A to 44H are lateral aberration diagrams, at the second focus position, of Example 11; and
Fig. 45 is a schematic diagram showing an outline configuration example of a digital device incorporating a macro lens system.

## DETAILED DESCRIPTION OF PREFERRED EMBODIMENTS

Hereinafter, macro lens systems, imaging optical devices, and digital appliances according to the present invention will be described. A macro lens system according to the present invention is composed of, from the object side, a first lens group, a second lens group having a positive refractive power as a whole, and a third lens group having a negative refractive power as a whole, and is configured to achieve focusing from an object at infinity to an object at a close distance by moving only the second lens group toward the object side along the optical axis while keeping the first and third lens groups stationary. It is further characterized by fulfilling conditional formulae (1) and (2) below.

$$\beta \leq -0.45 \tag{1}$$

$$0.4 < f2 / f < 0.68 \tag{2}$$

where

$\beta$    represents the lateral magnification with focus on the closest object;
f2    represents the focal length of the second lens group; and
f    represents the focal length of the macro lens system as a whole with focus on an object at infinity.

Having the above construction, where focusing is achieved by the movement of the second lens group alone while the first and third lens groups remain stationary during focusing, the macro lens system is of a so-called inner focus type, and allows weight reduction in the focusing lens group. Moreover, focusing does not affect the total length, and this helps prevent contact with the target of shooting. The construction is thus suitable for macro lens systems, of which the imaging system tends to be close to the target of shooting.

Conditional formula (2) defines a condition for setting the focal length of the second lens group adequately so as to shorten the movement stroke for focusing and to suppress variation of aberrations during focusing. Under the lower limit of conditional formula (2), the second lens group has too high a positive optical power (an optical power being a quantity defined as the reciprocal of a focal length); then the astigmatism occurring in the second lens group varies greatly during focusing. Over the upper limit of the conditional formula (2), the second lens group has too low a positive optical power; then the second lens group has to move across a long stroke to reach the predetermined magnification condition defined by conditional formula (1), making it difficult to make the imaging system as a whole compact. An attempt to fulfill conditional formula (1) with a short movement stroke for the second lens group gives the third lens group too high a negative optical power. This results in a high axial ray height in the second lens group, making it difficult to correct spherical aberration and coma aberration.

With the distinctive construction described above, it is possible to realize a macro lens system, and an imaging optical device, where only one lens group is moved for focusing to achieve weight reduction and in addition it is moved across a reduced stroke to achieve compactness in the imaging system as a whole and in which variation of aberrations is suppressed over a wide focusing range. It is possible to realize, for example, a macro lens system with a compact total lens length combined with suppressed variation in performance during focusing, and an imaging optical system where a focusing lens group with a reduced weight can be adapted to effective contrast AF (automatic focusing). Such a macro lens system or imaging optical device can be used in a digital appliance (e.g., a digital camera) to additionally furnish it with a high-performance image input function in a lightweight, compact fashion, contributing to making the digital appliance compact, low-cost, high-performance, versatile, etc. Conditions, etc. for obtaining a good balance between those effects and for achieving higher optical performance, further reduction in weight and size, etc. will be described below.

It is further preferable that conditional formula (2a) below be fulfilled.

$$0.45 < f2 / f < 0.63 \qquad (2a)$$

This conditional formula (2a) defines, within the conditional range defined by conditional formula (2) above, a further preferable conditional range from the above-mentioned and other perspectives. Accordingly, by preferably fulfilling conditional formula (2a), it is possible to enhance the above-mentioned effects.

It is preferable that conditional formula (3) below be fulfilled.

$$-1.2 < f3 / f < -0.3 \qquad (3)$$

where

f3    represents the focal length of the third lens group; and
f    represents the focal length of the macro lens system as a whole with focus on an object at infinity.

Conditional formula (3) defines a condition for setting the focal length of the third lens group adequately to shorten the movement stroke for focusing and to suppress variation of aberrations during focusing. Under the lower limit of conditional formula (3), the third lens group has too low a negative optical power; then, as the second, positive, lens group moves, the focal length does not vary sufficiently. Thus, the second lens group has to move across an increased stroke to reach the predetermined magnification condition defined by conditional formula (1), making it difficult to make the imaging system as a whole compact. It is then difficult also to secure a sufficient back focus. Moreover, a degraded Petzval sum makes it difficult to suppress degradation of astigmatism. Over the upper limit of conditional formula (3), the third lens group has too high a negative optical power; this results in a high axial ray height in the second lens group, making it difficult to correct spherical aberration and coma aberration.

It is further preferable that conditional formula (3a) below be fulfilled.

$$-1.0 < f3 / f < -0.4 \qquad (3a)$$

This conditional formula (3a) defines, within the conditional range defined by conditional formula (3) above, a further preferable conditional range from the above-mentioned and other perspectives. Accordingly, by preferably fulfilling conditional formula (3a), it is possible to enhance the above-mentioned effects.

It is preferable that conditional formula (4) be fulfilled.

$$-0.2 < f / f1 < 0.3 \qquad (4)$$

where

f1    represents the focal length of the first lens group; and
f    represents the focal length of the macro lens system as a whole with focus on an object at infinity.

Conditional formula (4) defines a condition for setting the focal length of the first lens group adequately to achieve satisfactory aberration correction over a wide focusing range. In a construction where the first and third lens groups are stationary and the second lens group is movable for focusing, during focusing from an object at infinity to an object at a close distance, the second lens group moves greatly toward the object side. Under the lower limit of conditional formula (4), the first lens group has too high a negative optical power; this results in a large incident beam width around the position where the second lens group is focused on an object at infinity, making it difficult to correct spherical aberration and coma aberration. Moreover, the second lens group, which is movable, then has a large diameter, making it difficult to achieve weight reduction. Over the upper limit of conditional formula (4), the first lens group has too high a positive optical power; this results in large variation of the height of rays incident on the second lens group between at a position where focus is on an object at an infinite distance and at a position where focus is on an object at a close distance, making it difficult to suppress variation of spherical aberration and coma aberration during focusing.

It is further preferable that conditional formula (4a) below be fulfilled.

$$-0.15 < f / f1 < 0.2 \qquad (4a)$$

This conditional formula (4a) defines, within the conditional range defined by conditional formula (4) above, a further preferable conditional range from the above-mentioned and other perspectives. Accordingly, by preferably fulfilling conditional formula (4a), it is possible to enhance the above-mentioned effects.

It is preferable that the second lens group include at least one aspherical surface. For satisfactory correction of aberrations over a wide focusing range, it is preferable to increase the number of lens elements in the second lens group. However, increasing the number of lens elements results in an increase in the weight of the second lens group, making quick focusing difficult. It also makes quiet shooting of a moving image difficult. By, instead of increasing the number of lens elements, using an aspherical surface as a lens surface, it is possible to simultaneously achieve satisfactory correction of spherical aberration, astigmatism, coma aberration, etc. over a wide focusing range and weight reduction in the lens group that is moved for focusing.

It is preferable that a lens element having a positive refractive power and having aspherical surfaces on both sides be arranged at the most image-side position in the second lens group. In the most image-side lens element in the second lens group, the ray height varies most within the second lens group during focusing. Thus, arranging aspherical surfaces there helps effectively suppress variation of curvature of field and spherical aberration. Moreover, the lens used, i.e., a positive lens element having aspherical surfaces on both sides, is easy to manufacture, and is effective in cost reduction.

From the perspective of aberration correction, it is preferable that the first lens group include an aspherical surface. Using an aspherical surface in the first lens group helps more effectively suppress, for example, spherical aberration. From the perspective of aberration correction, it is preferable that the third lens group include an aspherical surface. Using an aspherical surface in the third lens group helps more effectively suppress, for example, coma aberration.

It is preferable that the most object-side lens element in the second lens group have a positive refractive power and fulfill conditional formula (5) below.

$$vdp \geq 60 \qquad (5)$$

where

vdp  represents the Abbe number of the most object-side lens element in the second lens group.

Using a positive lens element as the most object-side lens element in the second lens group helps, owing to its converging effect, reduce the diameter of a lens element arranged on the image side of the positive lens element, and thus helps effectively achieve weight reduction. Additionally fulfilling conditional formula (5) helps reduce variation of longitudinal chromatic aberration and lateral chromatic aberration during focusing.

It is further preferable that conditional formula (5a) below be fulfilled.

$$vdp \geq 65 \qquad (5a)$$

This conditional formula (5a) defines, within the conditional range defined by conditional formula (5) above, a further preferable conditional range from the above-mentioned and other perspectives. Accordingly, by preferably fulfilling conditional formula (5a), it is possible to enhance the above-mentioned effects.

It is preferable that an aperture stop that remains stationary during focusing be disposed between the first and second lens groups. Keeping the aperture stop stationary during focusing helps achieve weight reduction in the lens group that is moved for focusing.

It is preferable that the first lens group as a whole have a positive refractive power. This makes it possible to provide a macro lens system of a positive-positive-negative design that offers a good balance between compactness and aberration performance.

A macro lens system according to the present invention is suitable for use as an imaging lens in a digital appliance with an image input function (e.g., a digital camera); by combining one with an image sensor or the like, it is possible to build an imaging optical device that optically acquires an image of a subject and outputs it as an electrical signal. An imaging optical device is an optical device that constitutes a main component of a camera used for the shooting of still and moving images of a subject, and is composed of, for example, from the object side (i.e., from the subject side), a macro lens system for forming an optical image of an object and an image sensor for converting the optical image formed by the macro lens system into an electrical signal. By arranging a macro lens system having the distinctive construction as described previously such that an optical image of a subject is formed on a light-receiving surface (i.e., imaging surface) of the image sensor, it is possible to realize a compact, low-cost, high-performance imaging optical device and a digital appliance incorporating it.

Examples of digital appliances with an image input function include cameras such as digital cameras, video cameras, surveillance cameras, security cameras, vehicle-mounted cameras, and videophone cameras. Further examples include personal computers, portable digital appliances (such as portable telephones, smartphones (high-functionality portable telephones), tablet terminals, mobile computers, etc.), peripheral devices for those (such as scanners, printers, mousse, etc.), and other digital appliances (drive recorders, defense equipment, etc.) furnished with a camera function by incorporation or external fitting. As will be understood from these examples, not only can an imaging optical device be used to build a camera, but an imaging optical device can also be incorporated in various appliances to furnish them with a camera function. It is possible to build, for example, a digital appliance with an image input function, such as a camera-equipped portable telephone.

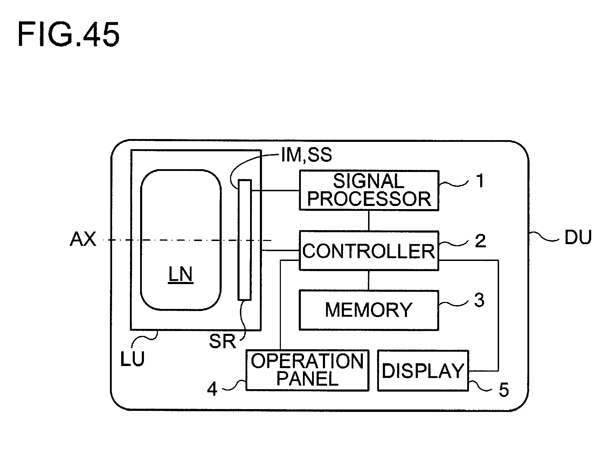

Fig. 45 shows an outline configuration example of a digital appliance DU as one example of a digital appliance with an image input function, in a schematic cross section thereof. An imaging optical device LU incorporated in the digital appliance DU shown in Fig. 45 includes, from the object side (i.e., the subject side), a macro lens system LN for forming an optical image (image surface) IM of an object (with AX representing an optical axis) and an image sensor SR for converting the optical image IM formed on a light-receiving surface (imaging surface) SS by the macro lens system LN into an electrical signal, and further includes, as necessary, a plane-parallel plate (corresponding to, e.g., a cover glass of the image sensor SR; and an optical filter such as an optical low-pass filter and an infrared cut filter arranged as necessary). When a digital appliance DU is built by use of an imaging optical device LU, typically the imaging optical device LU is arranged in the body of the digital appliance DU; to realize a camera function, various forms of implementation can be adopted as necessary. For example, an imaging optical device LU built as a unit can be configured to be removable from, or rotatable relative to, the body of a digital appliance DU.

The macro lens system LN is an imaging optical system including, from the object side, a first lens group, a second lens group having a positive refractive power as a whole, and a third lens group having a negative refractive power as a whole. It is so configured that, while the first and third lens groups are kept stationary, only the second lens group is moved toward the object side along the optical axis AX to achieve focusing from an object at infinity to an object at a close distance, and that an optical image IM is formed on the light-receiving surface SS of the image sensor SR.

As the image sensor SR, for example, a solid-state image sensor such as a CCD (charge-coupled device) image sensor or a CMOS (complementary metal-oxide semiconductor) image sensor having a plurality of pixels is used. The macro lens system LN is arranged such that an optical image IM of a subject is formed on the light-receiving surface SS, i.e., a photoelectric conversion portion, of the image sensor SR. Thus, the optical image IM formed by the macro lens system LN is converted into an electrical signal by the image sensor SR.

The digital appliance DU includes, in addition to the imaging optical device LU, a signal processor 1, a controller 2, a memory 3, an operation panel 4, a display 5, etc. The signal generated by the image sensor SR is subjected to predetermined digital image processing, image compression processing, etc. in the signal processor 1 as necessary, and is then, as a digital image signal, recorded to the memory 3 (such as a semiconductor memory or an optical disc) or, as the case may be, transmitted to another device via a cable or after being converted into an infrared signal (e.g., a communication function of a portable telephone). The controller 2 includes a microcomputer, and comprehensively performs control of image taking functions (such as still-image and moving-image taking functions) and of image playback and other functions; and control of lens moving mechanisms for focusing etc. For example, the controller 2 controls the imaging optical device LU such that at least either the shooting of a still image of a subject or the shooting of a moving image of a subject is performed. The display 5 includes a display divide such as a liquid crystal monitor, and displays an image based on an image signal resulting from the conversion by the image sensor SR or based on image information recorded in the memory 3. The operation panel 4 includes operation buttons (e.g., a release button), an operation dial (e.g., a shooting mode dial), etc., and conveys information entered by the operator to the controller 2.

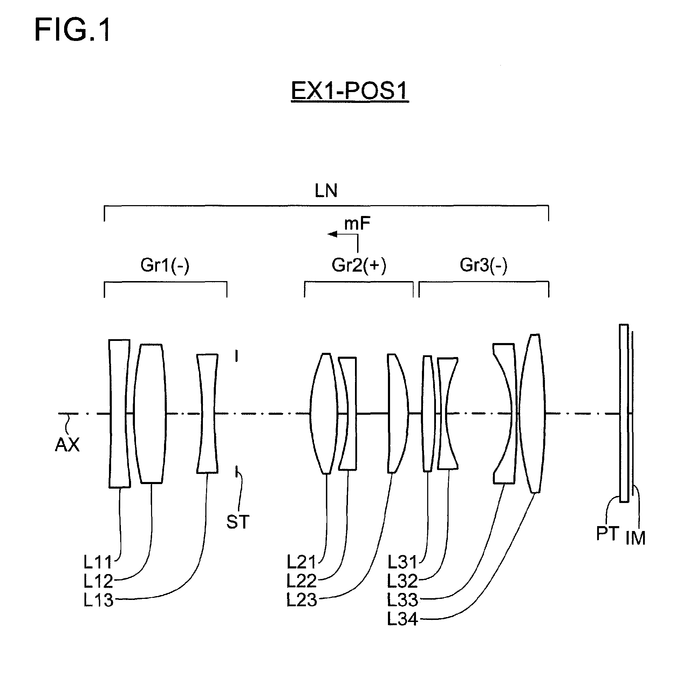

Next, the optical construction of the macro lens system LN will be described in more detail by way of a first to an eleventh embodiment thereof. Figs. 1 to 11 are lens construction diagrams corresponding to the macro lens systems LN according to the first to eleventh embodiments respectively, each showing the lens arrangement at a first focus position POS1 (in a subject-at-infinity condition). For focusing, the second lens group Gr2 moves along the optical axis AX. That is, the second lens group Gr2 is a focusing group, and for focusing from infinity to an object at a close distance, it moves toward the object side as indicated by arrow mF.

The macro lens systems LN according to the first to eleventh embodiments are each an imaging optical system composed of three lens groups, namely a (negative or positive), a positive, and a negative group wherein the first lens group Gr1 has a comparatively low optical power and the second, positive, lens group Gr2 serves as a focusing group. Between the first and second lens groups Gr1 and Gr2, an aperture stop ST is arranged, and the aperture stop ST remains stationary during focusing. Between the macro lens system LN and the image surface IM, a plane-parallel plate PT is arranged, and the plane-parallel plate PT is a flat plate of glass that is equivalent to the total optical thickness of the cover glass of the image sensor SR, etc.

In the macro lens system LN (Fig. 1) according to the first embodiment, the lens groups are each composed, from the object side, as follows. The first lens group Gr1 having a negative optical power is composed of a biconcave negative lens element L11, a biconvex positive lens element L12, and a biconcave negative lens element L13, and an aperture stop ST is arranged on the image surface IM side of the first lens group Gr1. The second lens group Gr2 having a positive optical power is composed of a biconvex positive lens element L21, a negative meniscus lens element L22 concave to the object side, and a biconvex positive lens element L23 having aspherical surfaces on both sides. The third lens group Gr3 having a negative optical power is composed of a biconvex positive lens element L31, a biconcave negative lens element L32, a negative meniscus lens element L33 concave to the object side, and a biconvex positive lens element L34.

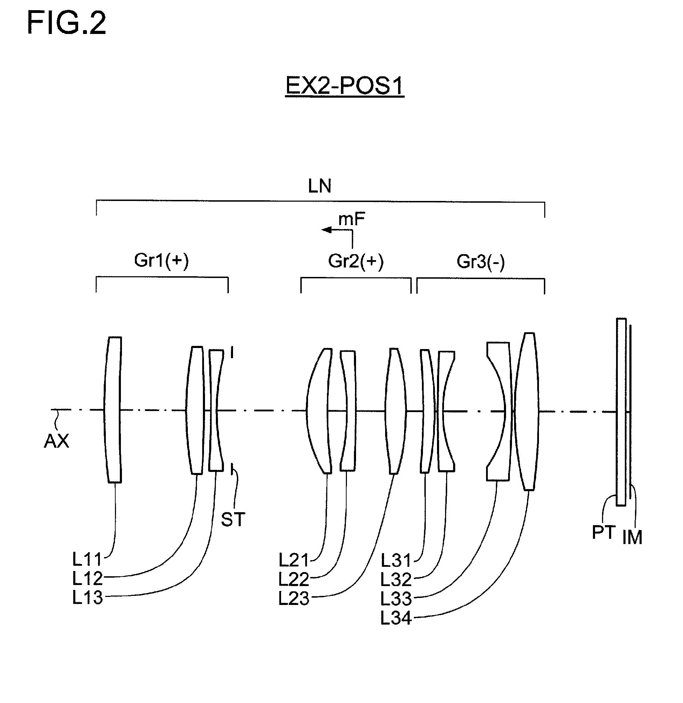

In the macro lens system LN (Fig. 2) according to the second embodiment, the lens groups are each composed, from the object side, as follows. The first lens group Gr1 having a positive optical power is composed of a positive meniscus lens element L11 convex to the object side, a biconvex positive lens element L12, and a biconcave negative lens element L13, and an aperture stop ST is arranged on the image surface IM side of the first lens group Gr1. The second lens group Gr2 having a positive optical power is composed of a positive meniscus lens element L21 convex to the object side, a negative meniscus lens element L22 concave to the object side, and a biconvex positive lens element L23 having aspherical surfaces on both sides. The third lens group Gr3 having a negative optical power is composed of a positive meniscus lens element L31 convex to the image side, a negative meniscus lens element L32 concave to the image side, a negative meniscus lens element L33 concave to the object side, and a biconvex positive lens element L34.

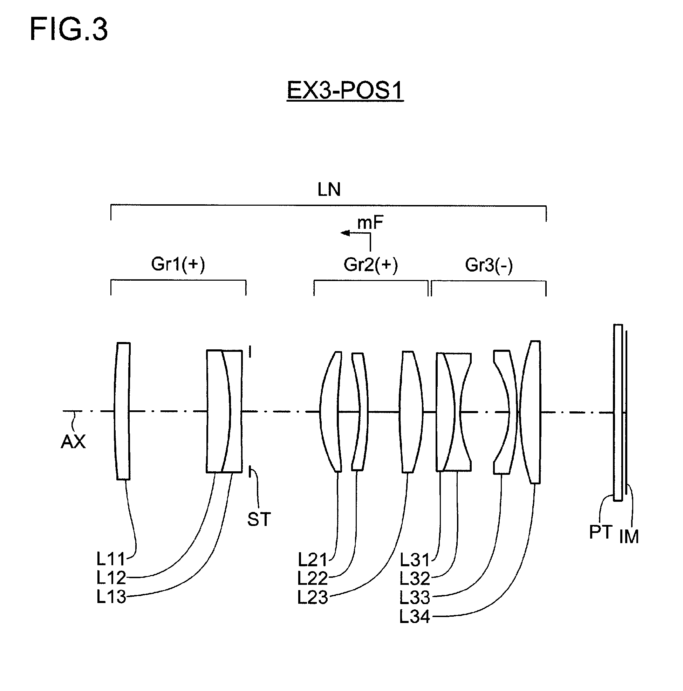

In the macro lens system LN (Fig. 3) according to the third embodiment, the lens groups are each composed, from the object side, as follows. The first lens group Gr1 having a positive optical power is composed of a positive meniscus lens element L11 convex to the object side and a cemented lens element made up of a positive meniscus lens element L12 convex to the image side and a biconcave negative lens element L13, and an aperture stop ST is arranged on the image surface IM side of the first lens group Gr1. The second lens group Gr2 having a positive optical power is composed of a positive meniscus lens element L21 convex to the object side, a negative meniscus lens element L22 concave to the object side, and a biconvex positive lens element L23 having aspherical surfaces on both sides. The third lens group Gr3 having a negative optical power is composed of a cemented lens element made up of a biconvex positive lens element L31 and a biconcave negative lens element L32, a negative meniscus lens element L33 concave to the object side, and a biconvex positive lens element L34.

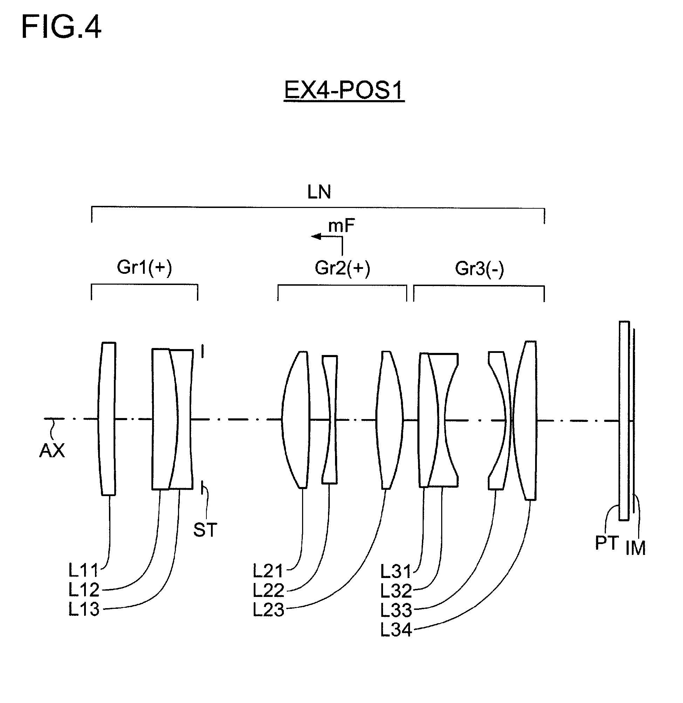

In the macro lens system LN (Fig. 4) according to the fourth embodiment, the lens groups are each composed, from the object side, as follows. The first lens group Gr1 having a positive optical power is composed of a positive meniscus lens element L11 convex to the object side and a cemented lens element made up of a positive meniscus lens element L12 convex to the image side and a biconcave negative lens element L13, and an aperture stop ST is arranged on the image surface IM side of the first lens group Gr1. The second lens group Gr2 having a positive optical power is composed of a biconvex positive lens element L21, a biconcave negative lens element L22, and a biconvex positive lens element L23 having aspherical surfaces on both sides. The third lens group Gr3 having a negative optical power is composed of a cemented lens element made up of a biconvex positive lens element L31 and a biconcave negative lens element L32, a negative meniscus lens element L33 concave to the object side, and a biconvex positive lens element L34.

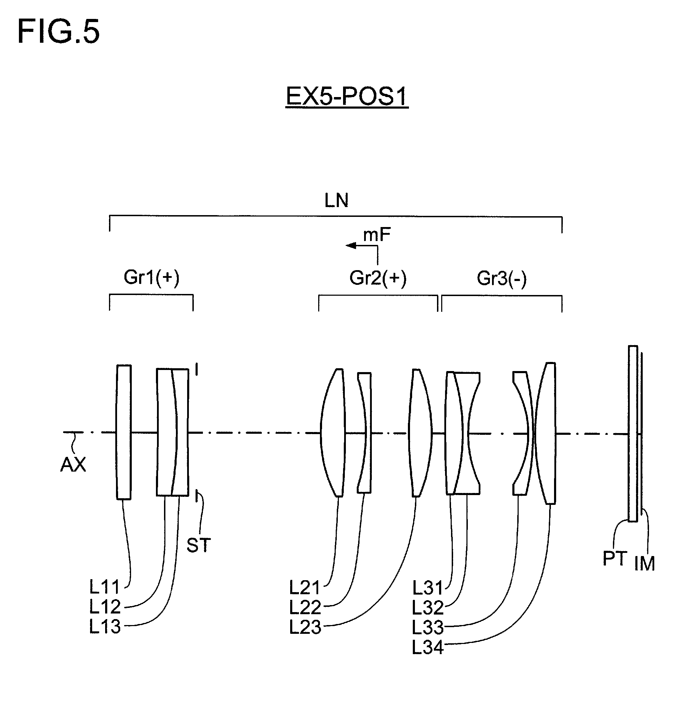

In the macro lens system LN (Fig. 5) according to the fifth embodiment, the lens groups are each composed, from the object side, as follows. The first lens group Gr1 having a positive optical power is composed of a biconvex positive lens element L11 and a cemented lens element made up of a positive meniscus lens element L12 convex to the image side and a biconcave negative lens element L13, and an aperture stop ST is arranged on the image surface IM side of the first lens group Gr1. The second lens group Gr2 having a positive optical power is composed of a biconvex positive lens element L21, a negative meniscus lens element L22 concave to the object side, and a biconvex positive lens element L23 having aspherical surfaces on both sides. The third lens group Gr3 having a negative optical power is composed of a cemented lens element made up of a biconvex positive lens element L31 and a biconcave negative lens element L32, a negative meniscus lens element L33 concave to the object side, and a biconvex positive lens element L34.

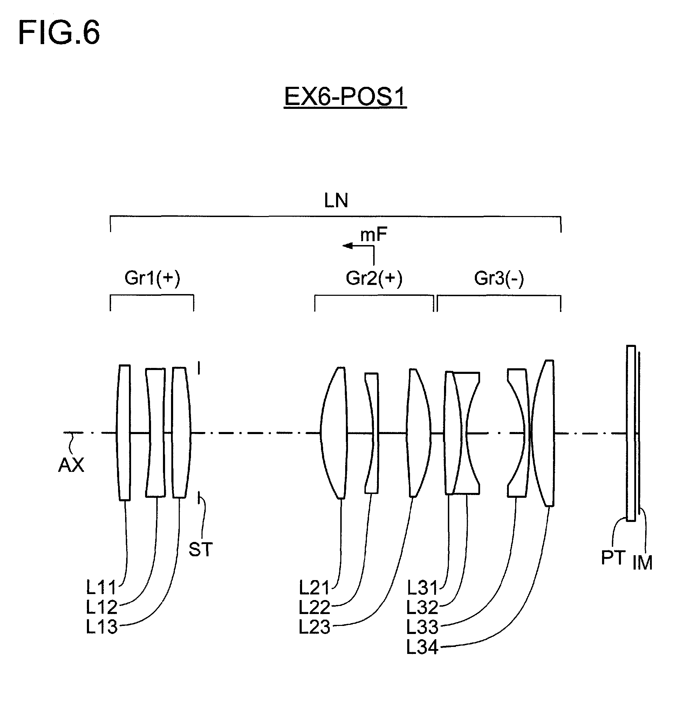

In the macro lens system LN (Fig. 6) according to the sixth embodiment, the lens groups are each composed, from the object side, as follows. The first lens group Gr1 having a positive optical power is composed of a biconvex positive lens element L11, a biconcave negative lens element L12, and a biconvex positive lens element L13 having aspherical surfaces on both sides, and an aperture stop ST is arranged on the image surface IM side of the first lens group Gr1. The second lens group Gr2 having a positive optical power is composed of a biconvex positive lens element L21, a negative meniscus lens element L22 concave to the object side, and a biconvex positive lens element L23 having aspherical surfaces on both sides. The third lens group Gr3 having a negative optical power is composed of a cemented lens element made up of a biconvex positive lens element L31 and a biconcave negative lens element L32, a negative meniscus lens element L33 concave to the object side, and a biconvex positive lens element L34.

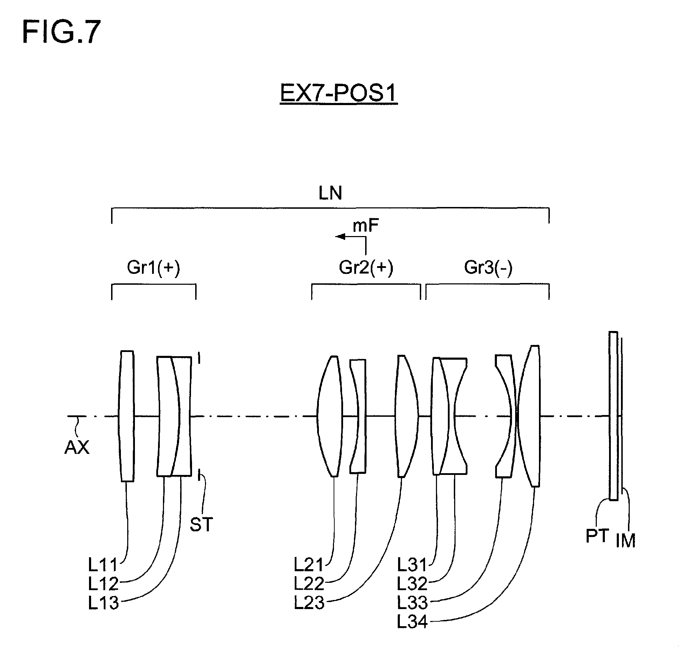

In the macro lens system LN (Fig. 7) according to the seventh embodiment, the lens groups are each composed, from the object side, as follows. The first lens group Gr1 having a positive optical power is composed of a biconvex positive lens element L11 and a cemented lens element made up of a positive meniscus lens element L12 convex to the image side and a biconcave negative lens element L13, and an aperture stop ST is arranged on the image surface IM side of the first lens group Gr1. The second lens group Gr2 having a positive optical power is composed of a biconvex positive lens element L21, a negative meniscus lens element L22 concave to the object side, and a biconvex positive lens element L23 having aspherical surfaces on both sides. The third lens group Gr3 having a negative optical power is composed of a cemented lens element made up of a biconvex positive lens element L31 having an aspherical surface on the object side and a biconcave negative lens element L32, a negative meniscus lens element L33 concave to the object side, and a biconvex positive lens element L34.

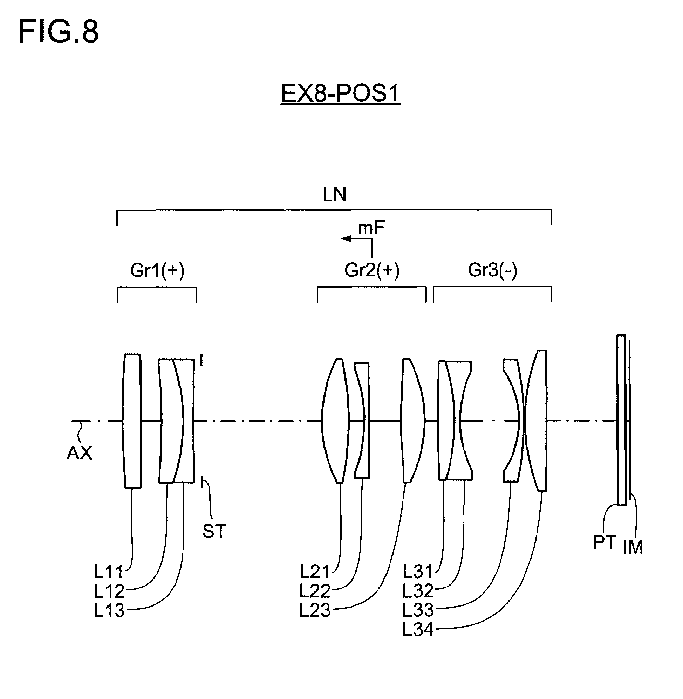

In the macro lens system LN (Fig. 8) according to the eighth embodiment, the lens groups are each composed, from the object side, as follows. The first lens group Gr1 having a positive optical power is composed of a biconvex positive lens element L11 and a cemented lens element made up of a positive meniscus lens element L12 convex to the image side and having an aspherical surface on the object side and a biconcave negative lens element L13, and an aperture stop ST is arranged on the image surface IM side of the first lens group Gr1. The second lens group Gr2 having a positive optical power is composed of a biconvex positive lens element L21, a negative meniscus lens element L22 concave to the object side, and a biconvex positive lens element L23 having aspherical surfaces on both sides. The third lens group Gr3 having a negative optical power is composed of a cemented lens element made up of a biconvex positive lens element L31 and a biconcave negative lens element L32, a negative meniscus lens element L33 concave to the object side, and a biconvex positive lens element L34.

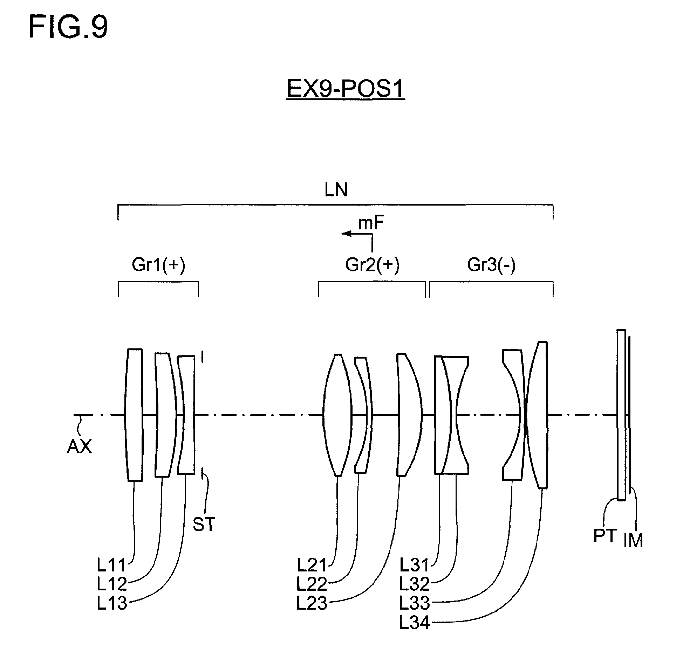

In the macro lens system LN (Fig. 9) according to the ninth embodiment, the lens groups are each composed, from the object side, as follows. The first lens group Gr1 having a positive optical power is composed of a biconvex positive lens element L11, a positive meniscus lens element L12 convex to the image side and having aspherical surfaces on both sides, and a biconcave negative lens element L13, and an aperture stop ST is arranged on the image surface IM side of the first lens group Gr1. The second lens group Gr2 having a positive optical power is composed of a biconvex positive lens element L21, a negative meniscus lens element L22 concave to the object side, and a positive meniscus lens element L23 convex to the image side and having aspherical surfaces on both sides. The third lens group Gr3 having a negative optical power is composed of a cemented lens element made up of a positive meniscus lens element L31 convex to the image side and a biconcave negative lens element L32, a negative meniscus lens element L33 concave to the object side, and a biconvex positive lens element L34.

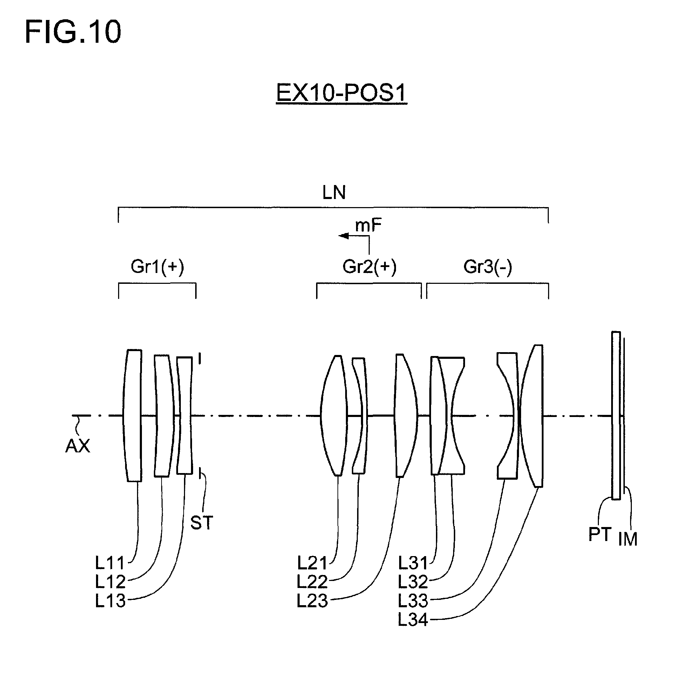

In the macro lens system LN (Fig. 10) according to the tenth embodiment, the lens groups are each composed, from the object side, as follows. The first lens group Gr1 having a positive optical power is composed of a positive meniscus lens element L11 convex to the object side, a positive meniscus lens element L12 convex to the image side and having aspherical surfaces on both sides, and a biconcave negative lens element L13, and an aperture stop ST is arranged on the image surface IM side of the first lens group Gr1. The second lens group Gr2 having a positive optical power is composed of a biconvex positive lens element L21, a negative meniscus lens element L22 concave to the object side, and a biconvex positive lens element L23 having aspherical surfaces on both sides. The third lens group Gr3 having a negative optical power is composed of a cemented lens element made up of a biconvex positive lens element L31 and a biconcave negative lens element L32, a negative meniscus lens element L33 concave to the object side, and a biconvex positive lens element L34.

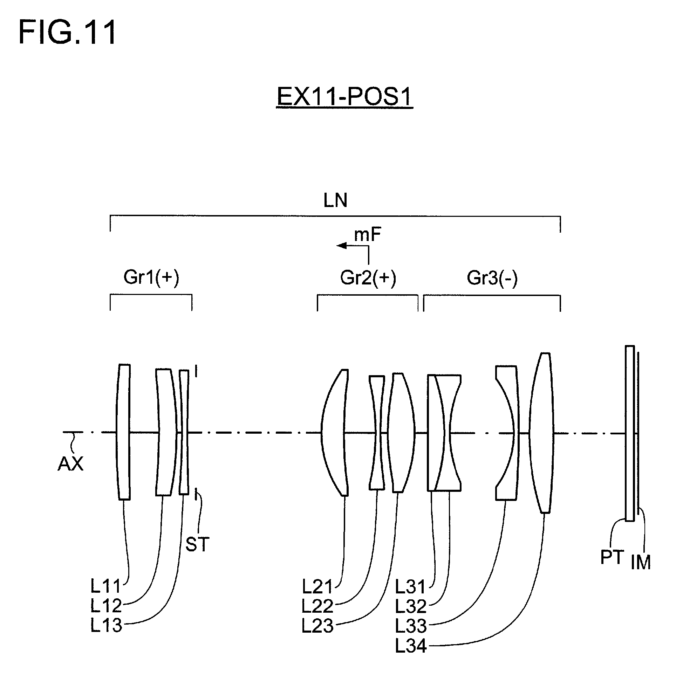

In the macro lens system LN (Fig. 11) according to the eleventh embodiment, the lens groups are each composed, from the object side, as follows. The first lens group Gr1 having a positive optical power is composed of a positive meniscus lens element L11 convex to the object side, a positive meniscus lens element L12 convex to the image side and having aspherical surfaces on both sides, and a biconcave negative lens element L13, and an aperture stop ST is arranged on the image surface IM side of the first lens group Gr1. The second lens group Gr2 having a positive optical power is composed of a positive meniscus lens element L21 convex to the object side, a biconcave negative lens element L22, and a biconvex positive lens element L23 having aspherical surfaces on both sides. The third lens group Gr3 having a negative optical power is composed of a cemented lens element made up of a planoconvex positive lens element L31 and a biconcave negative lens element L32, a negative meniscus lens element L33 concave to the object side, and a biconvex positive lens element L34.

In the first to eleventh embodiments (Figs. 1 to 11), the second lens group Gr2 includes, at the most image-side position in it, the lens element L23 having a positive optical power and having aspherical surfaces on both sides. Arranging aspherical surfaces in this way helps effectively suppress variation of curvature of field and spherical aberration at low cost.

In the sixth and eighth to eleventh embodiments (Figs. 6 and 8 to 11), the first lens group Gr1 includes an aspherical surface. Arranging an aspherical surface in this way helps more effectively suppress spherical aberration. In the seventh embodiment (Fig. 7), the third lens group Gr3 includes an aspherical surface. Arranging an aspherical surface in this way helps more effectively correct coma aberration.

EXAMPLES

Hereinafter, the construction and other features of macro lens systems embodying the present invention will be described in further detail with reference to the construction and other data of practical examples. Examples 1 to 11 (EX 1 to EX 11) presented below are numerical examples corresponding respectively to the first to eleventh embodiments described previously, and the lens construction diagrams (Figs. 1 to 11) showing the first to eleventh embodiments also show the optical construction (lens arrangement, lens shapes, etc.) of the corresponding ones of Examples 1 to 11 respectively.

In the construction data of each practical example, listed as surface data are, from left to right, surface number i ("object" denoting the object surface, "stop" the aperture stop, and "image" the image surface), radius of curvature r (mm), axial distance d (mm), index of refraction nd for the d-line (with a wavelength of 587.56 nm), and Abbe number vd for the d-line. A surface whose surface number i is marked with an asterisk ("*") is an aspherical surface, of which the surface shape is defined by formula (AS) below based on a local rectangular coordinate system (x, y, z) having an origin at the vertex of the surface. Listed as aspherical surface data are aspherical surface coefficients, etc. In the aspherical surface data of each practical example, any missing coefficient is assumed to be zero, and for all the data, "e-n" stands for "$\times 10^{-n}$".

$$z = (c \cdot h^2) / \{1 + \sqrt{[1 - (1 + K) \cdot c^2 \cdot h^2]}\} + \Sigma(Aj \cdot h^j) \qquad \text{(AS)}$$

where

h  represents the height in a direction perpendicular to the Z axis (optical axis AX ($h^2 = x^2 + y^2$);

z  represents the sag in the optical axis AX direction (relative to the vertex of the surface) at the height h;

c  represents the curvature (the reciprocal of the radius of curvature) at the vertex;

K  represents the conic constant; and

Aj  represents the aspherical surface coefficient of order j.

Listed as miscellaneous data are, for each of the first focus position POS1 (infinity) with focus on an object at infinity and the second focus position POS2 ($\beta$) with focus on an object at a close distance, focal length of the entire system (Fl, mm), f-number (Fno.), half angle of view ($\omega$, °), image height (y'max, mm), total lens length (TL, mm), back focus (BF, mm), and variable axial distances (variable: di (i representing the surface number), mm). Listed as lens group data are the focal lengths of the individual lens groups (f1, f2, f3; mm). The back focus BF is given in terms of an air equivalent distance from the final lens surface to the paraxial image surface, and the total lens length TL is the sum of the distance from the foremost lens surface to the final lens surface and the back focus BF. Table 1 shows values corresponding to the conditional formulae in each practical example.

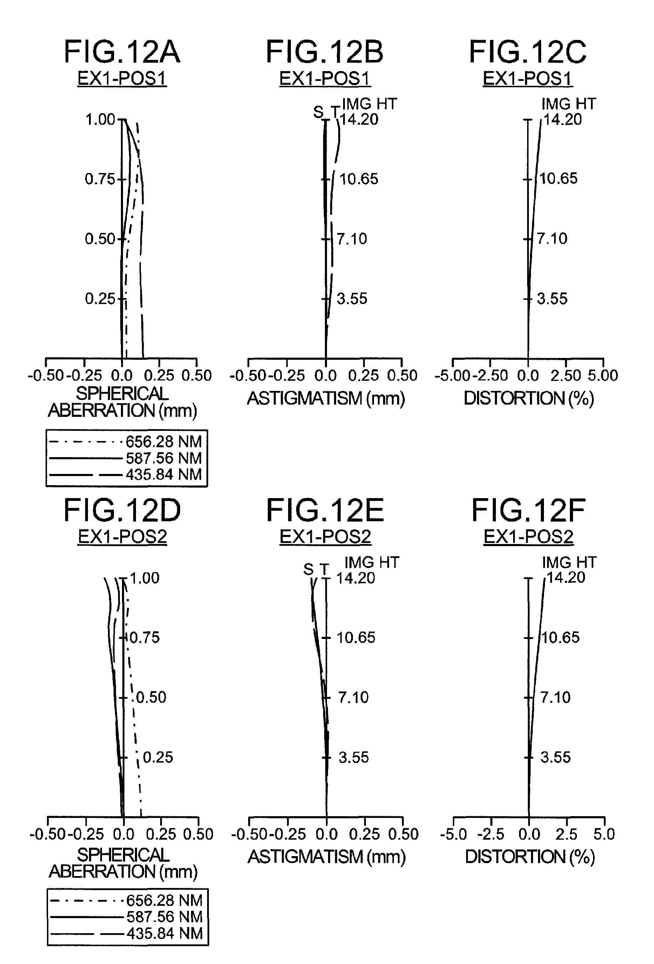

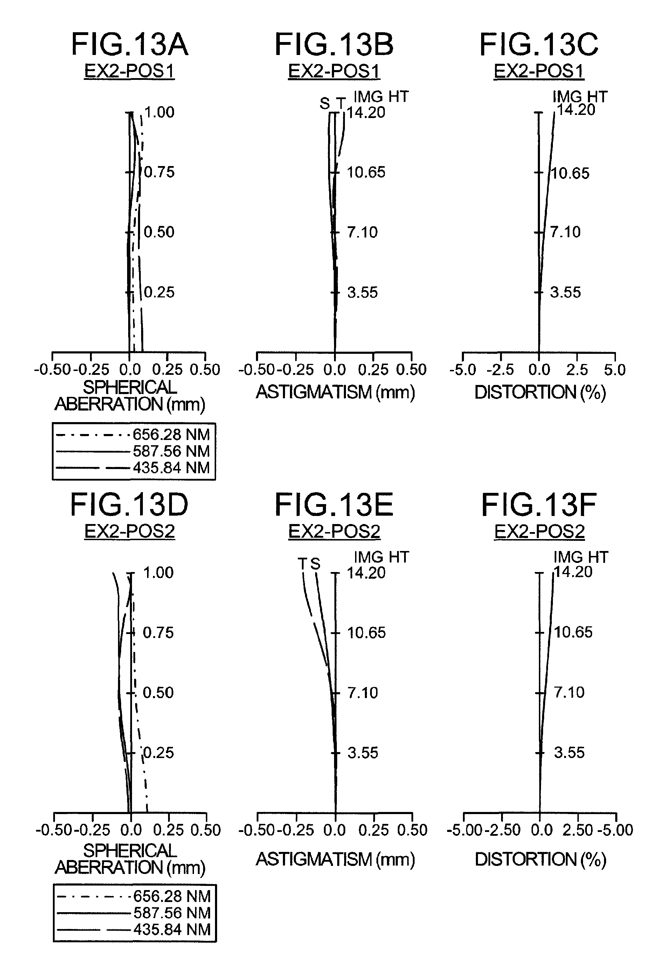

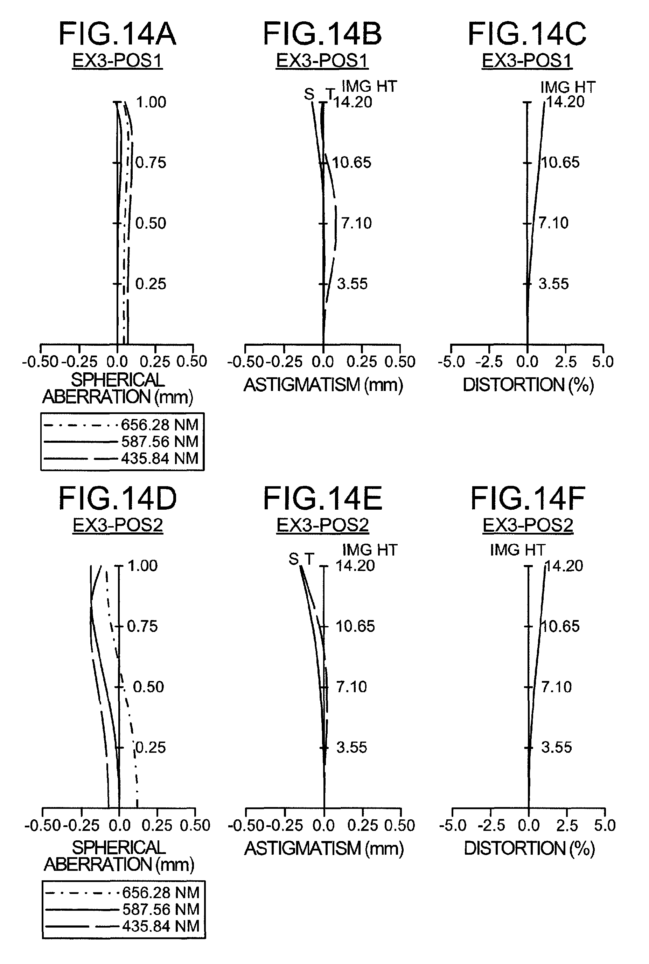

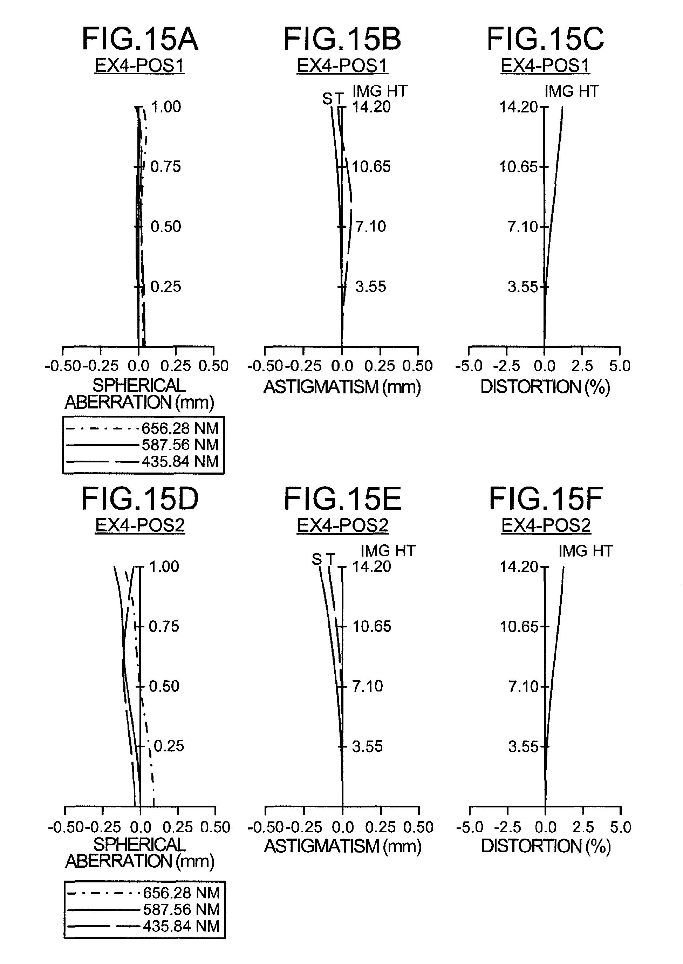

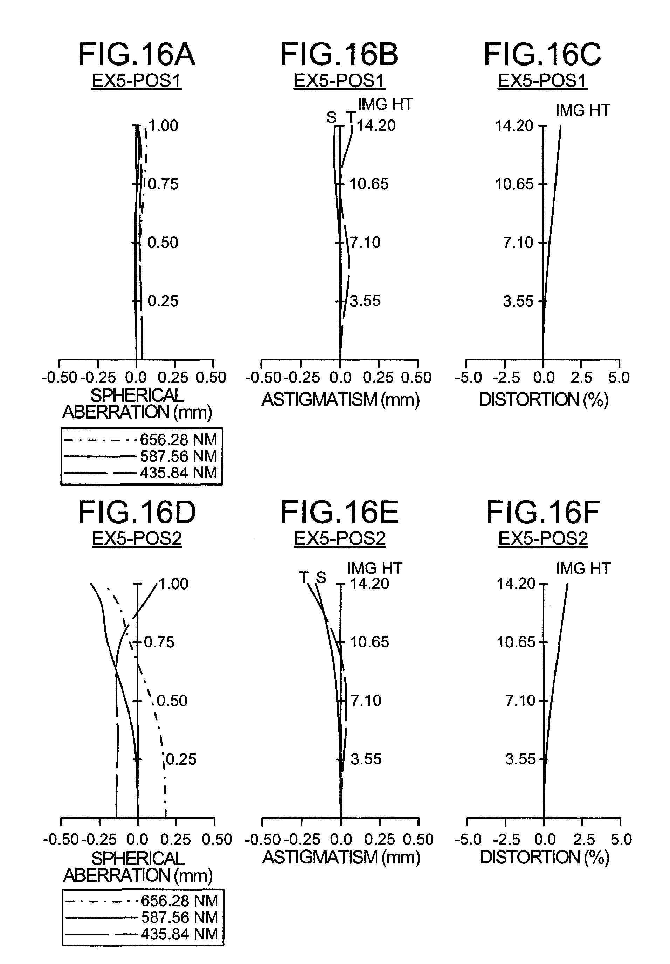

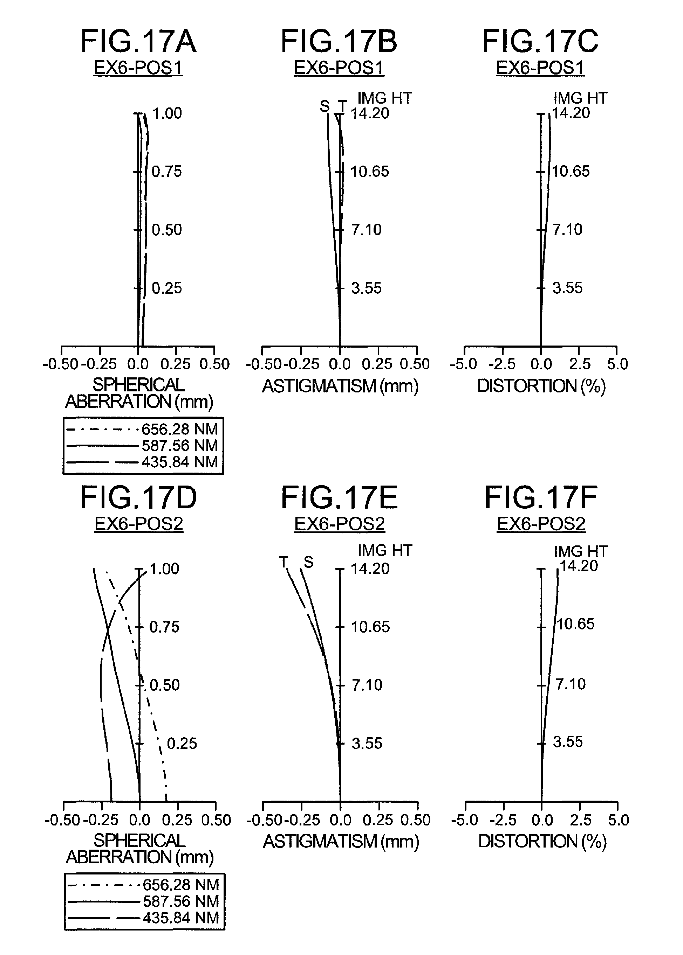

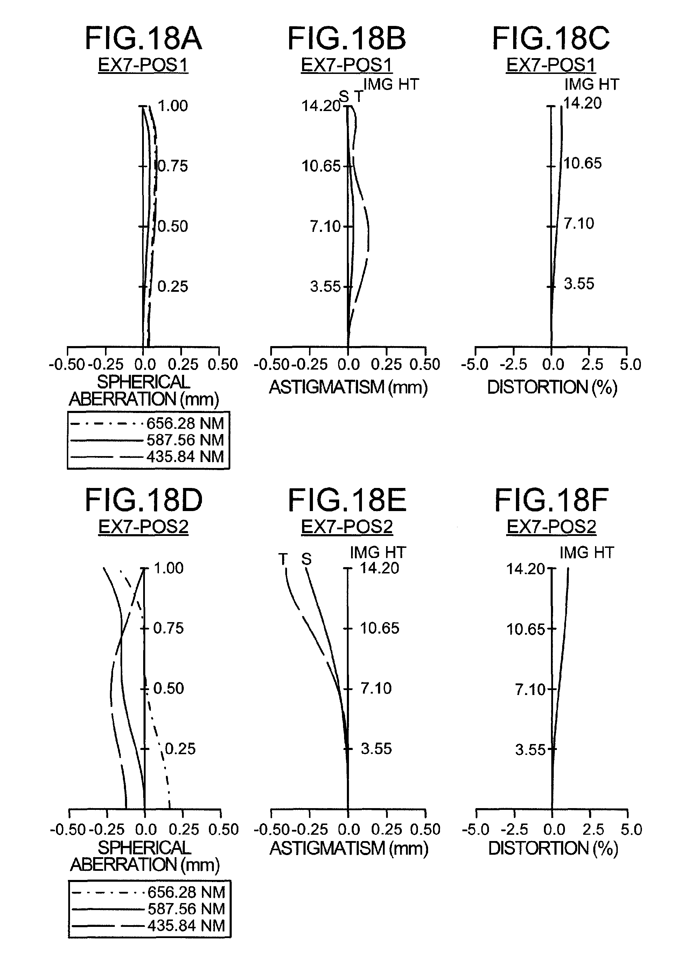

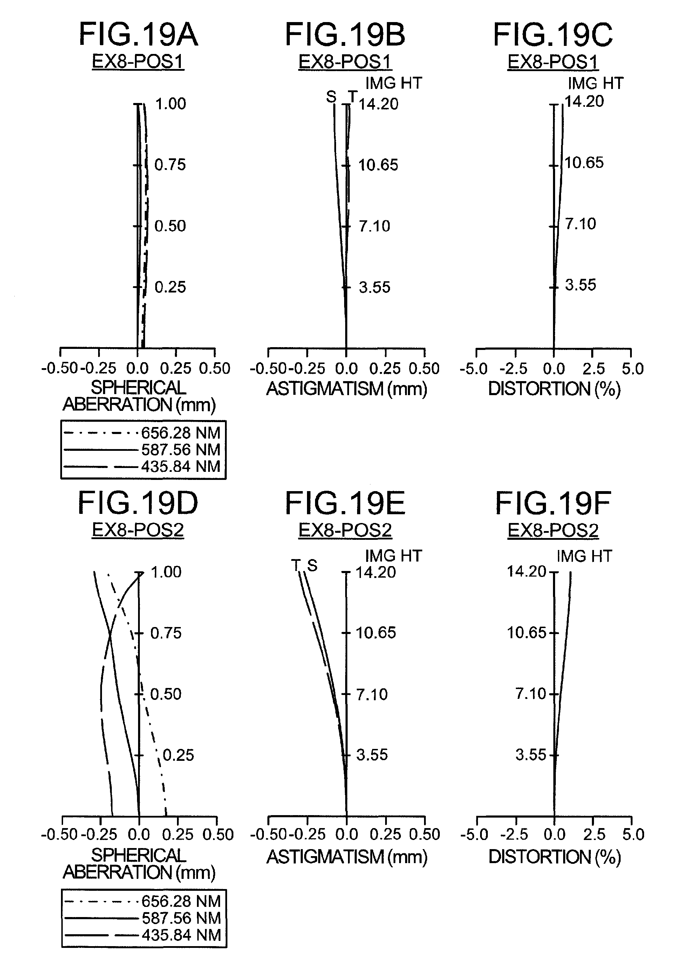

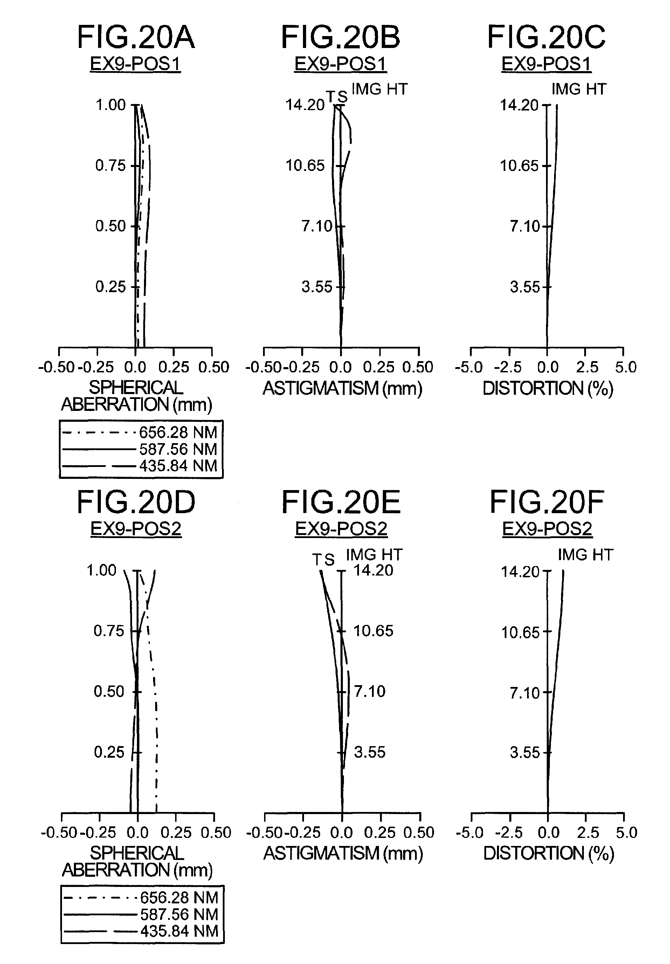

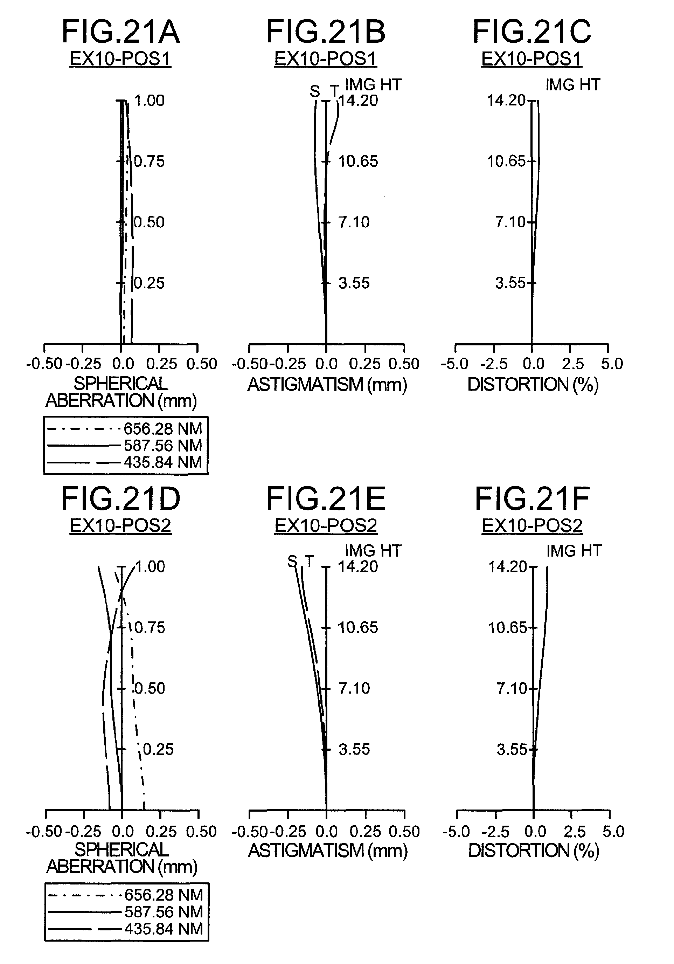

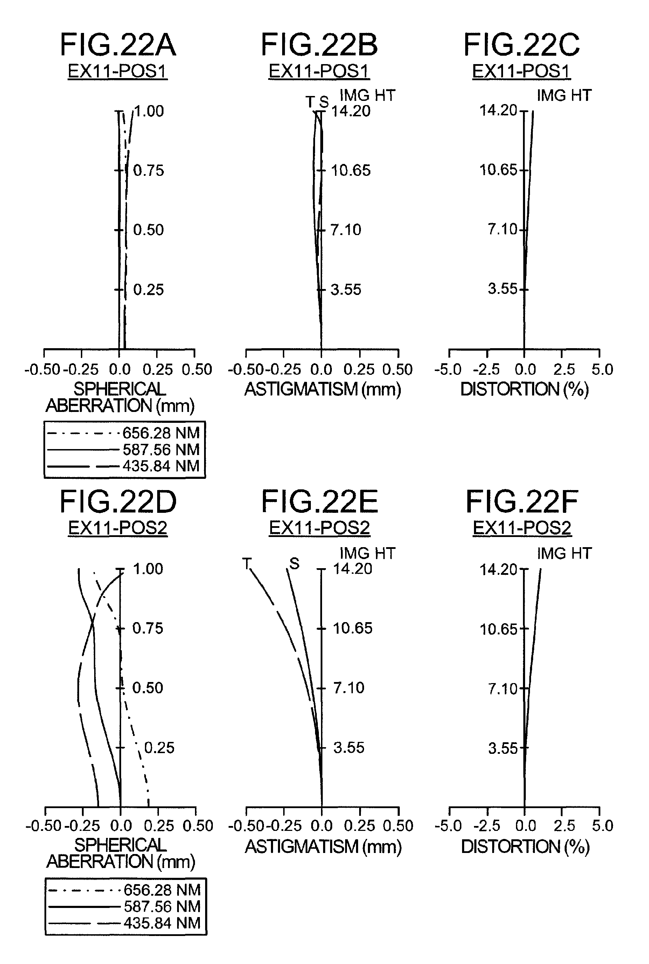

Figs. 12A-12F to 22A-22F are longitudinal aberration diagrams corresponding to Examples 1 to 11 (EX 1 to EX 11) respectively, Figs. 12A-12C to 22A-22C showing aberrations at the first focus position POS1, and Figs. 12D-12F to 22D-22F showing aberrations at the second focus position POS2. Of Figs. 12A-12F to 22A-22F, those suffixed with "A" and "D" are spherical aberration diagrams, those suffixed with "B" an "E" are astigmatism diagrams, and those suffixed with "C" an "F" are distortion diagrams.

In the spherical aberration diagrams, a solid line indicates the amount of spherical aberration for the d-line (with a wavelength of 587.56 nm), a dash-and-dot line indicates the amount of spherical aberration for the C-line (with a wavelength of 656.28 nm), and a broken line indicates the amount of spherical aberration for the g-line (with a wavelength of 435.84 nm), all in terms of a deviation (in mm) from the paraxial image surface in the optical axis AX direction, the vertical axis representing the height of incidence on the pupil as normalized with respect to the maximum height (i.e., the relative pupil height). In the astigmatism diagrams, a broken line T indicates the tangential image surface for the d-line and a solid line S indicates the sagittal image surface for the d-line, both in terms of a deviation (mm) from the paraxial image surface in the optical axis AX direction, the vertical axis representing the image height (IMG HT, in mm). In the distortion diagrams, the horizontal axis represents distortion for the d-line (in %), and the vertical axis represent the image height (IMG HT, in mm). The maximum value of the image height IMG HT (i.e., the maximum image height y'max) corresponds to one-half of the diagonal length of the light-receiving surface SS of the image sensor SR (i.e., the diagonal image height).

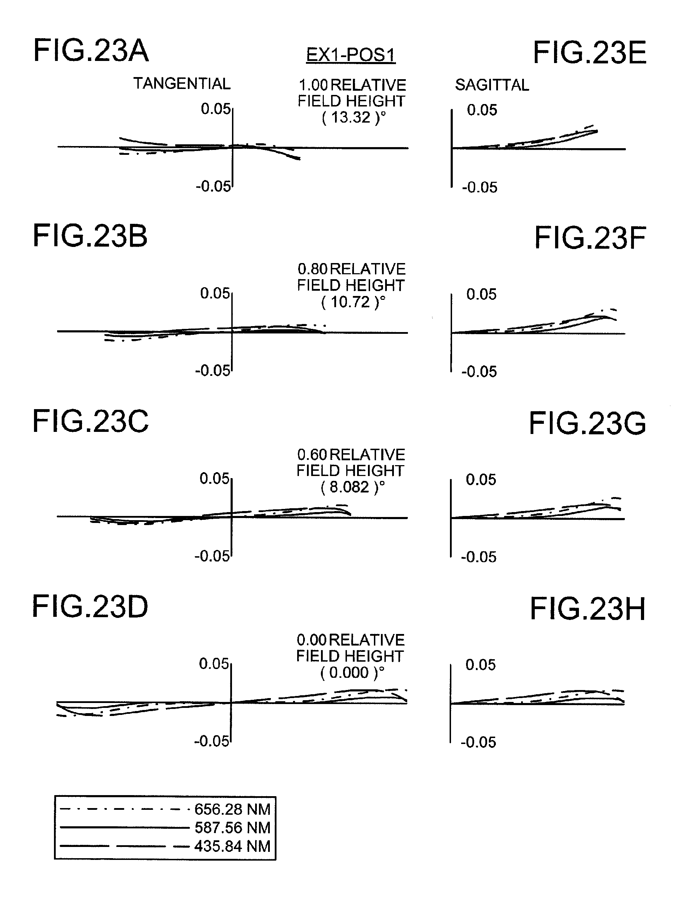

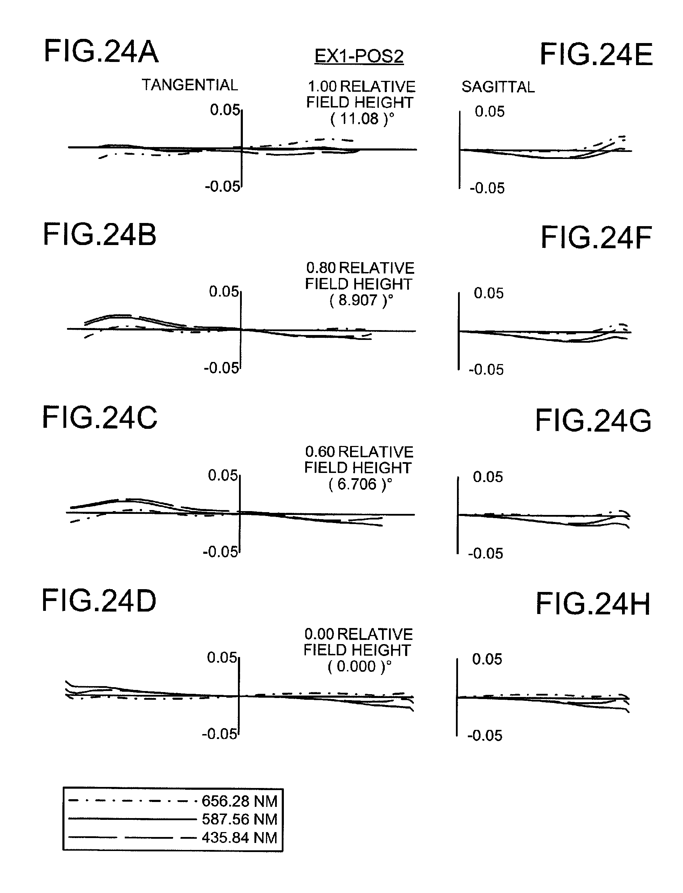

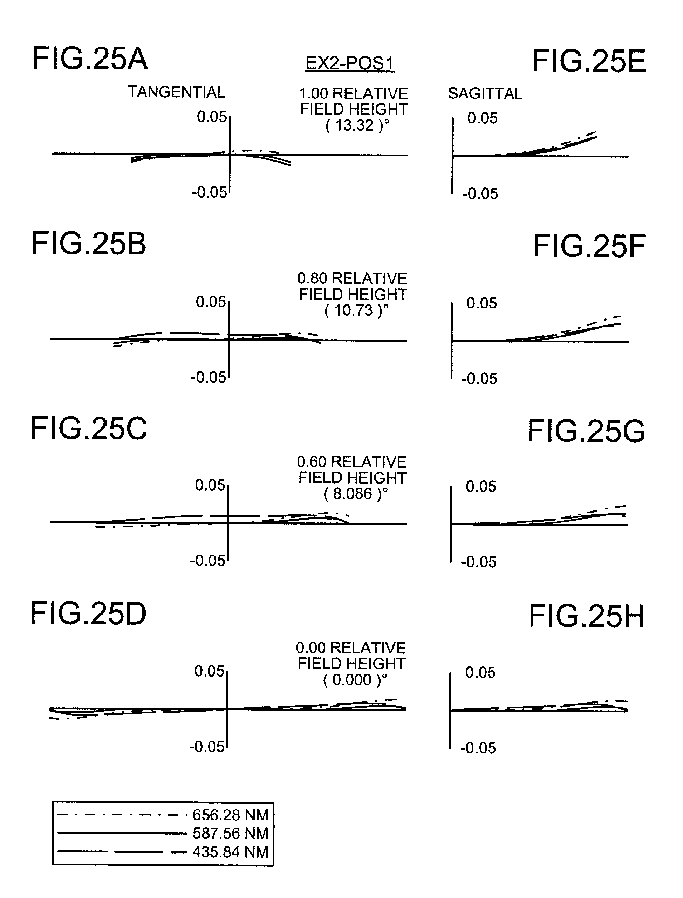

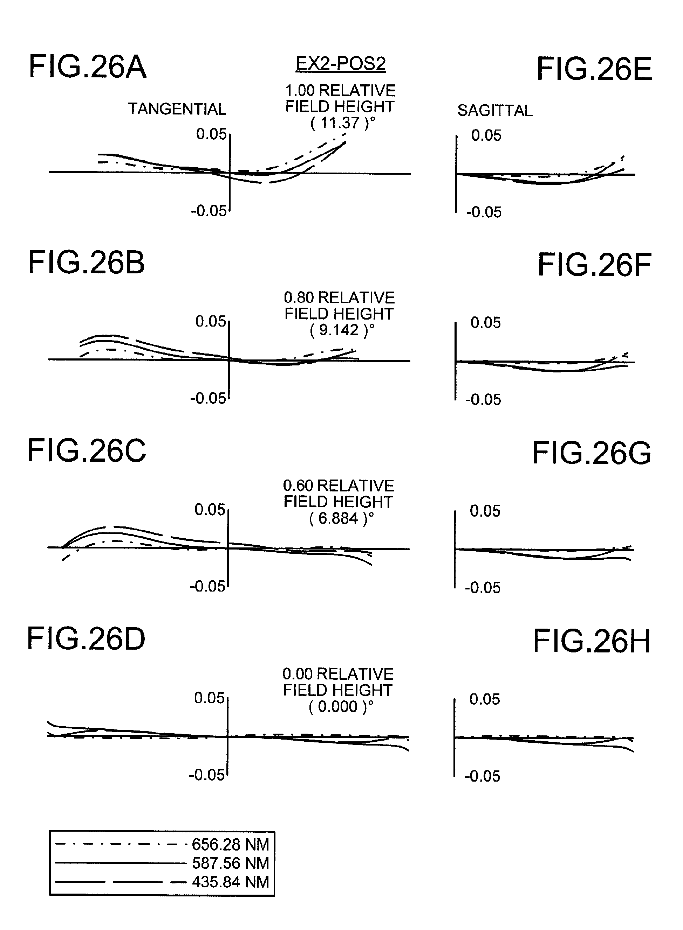

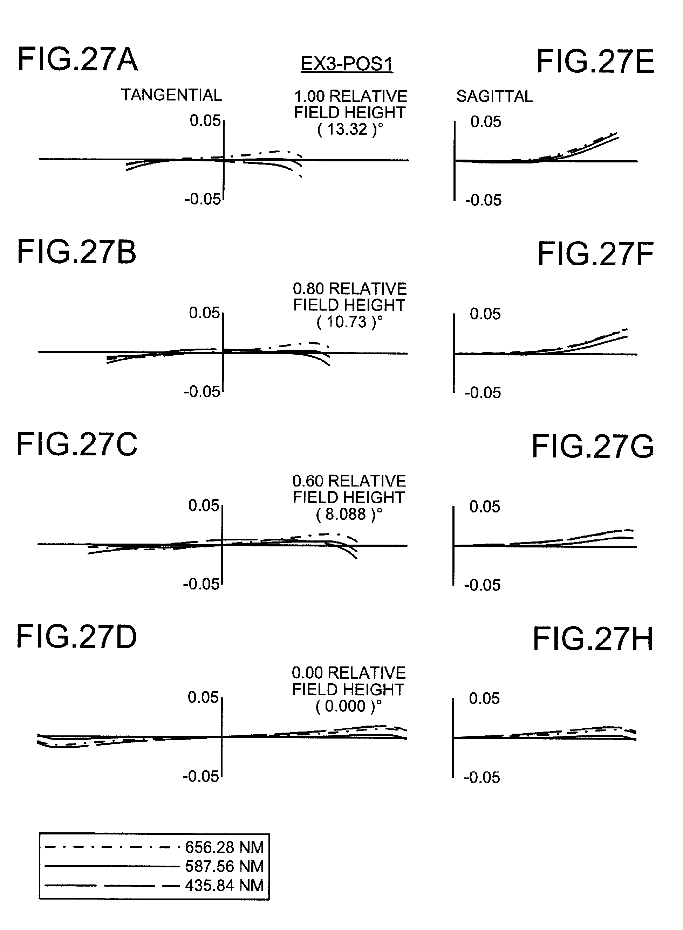

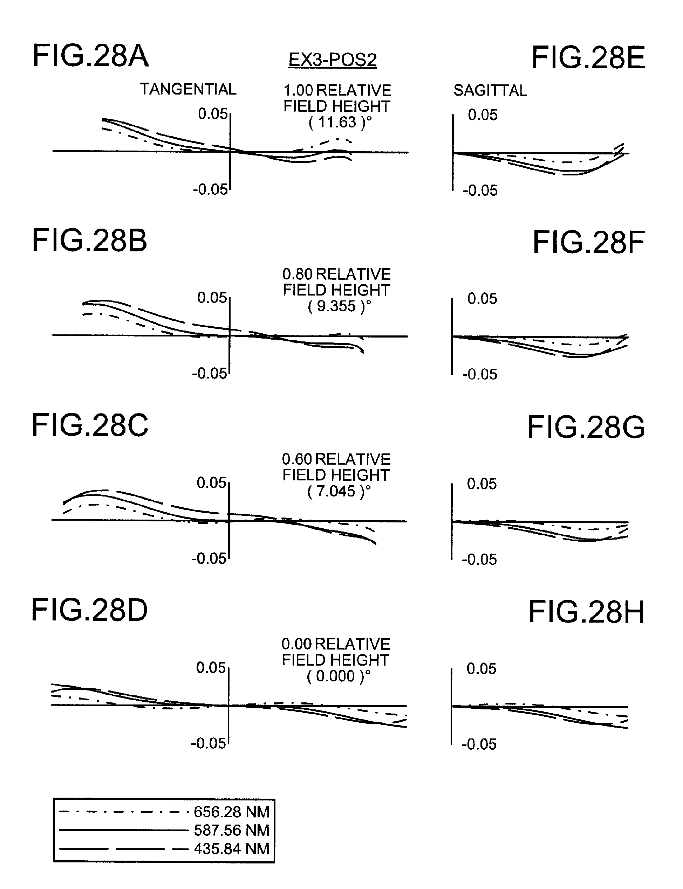

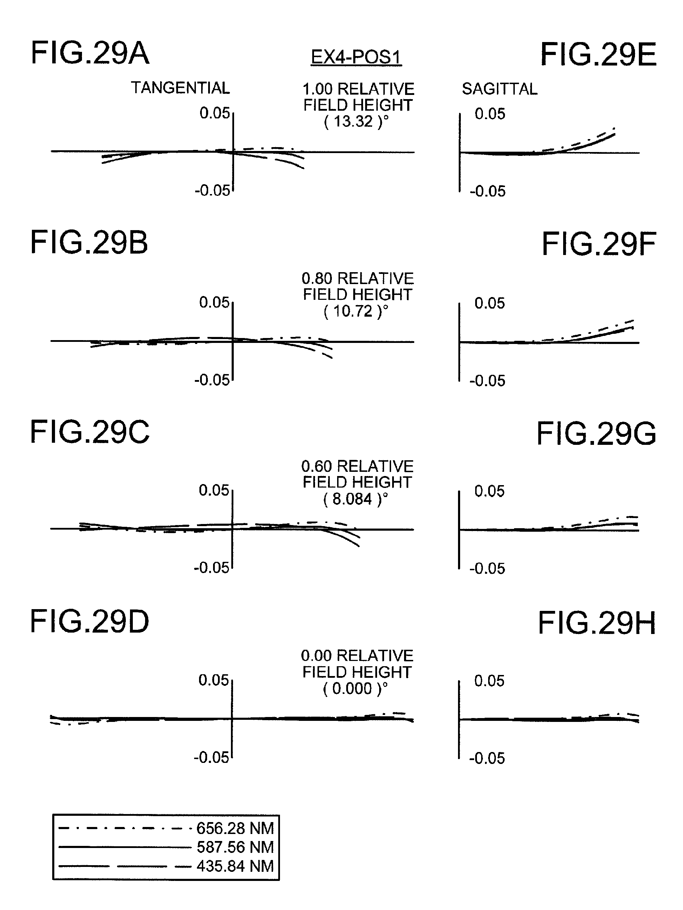

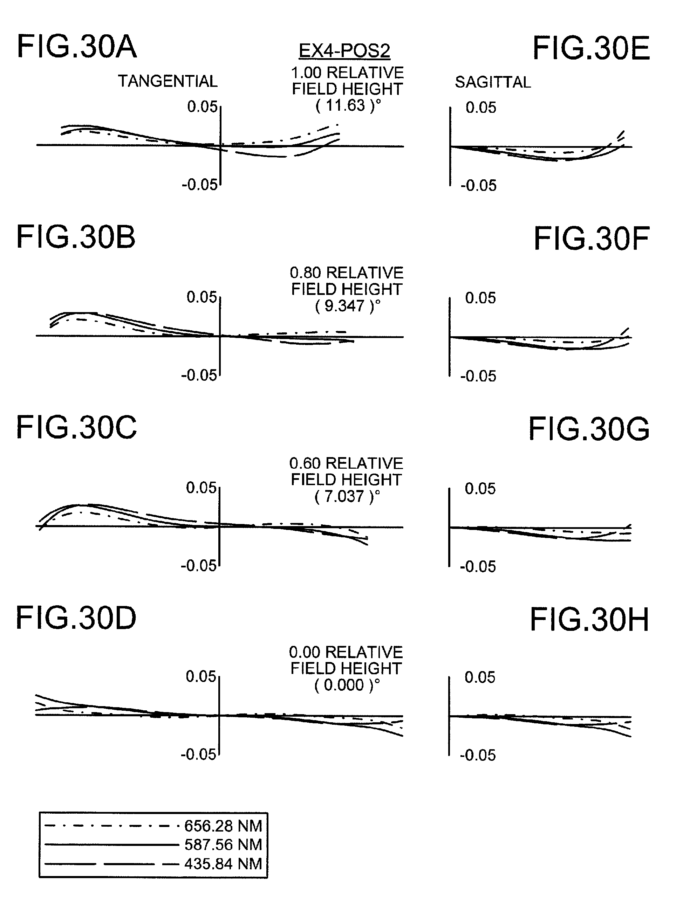

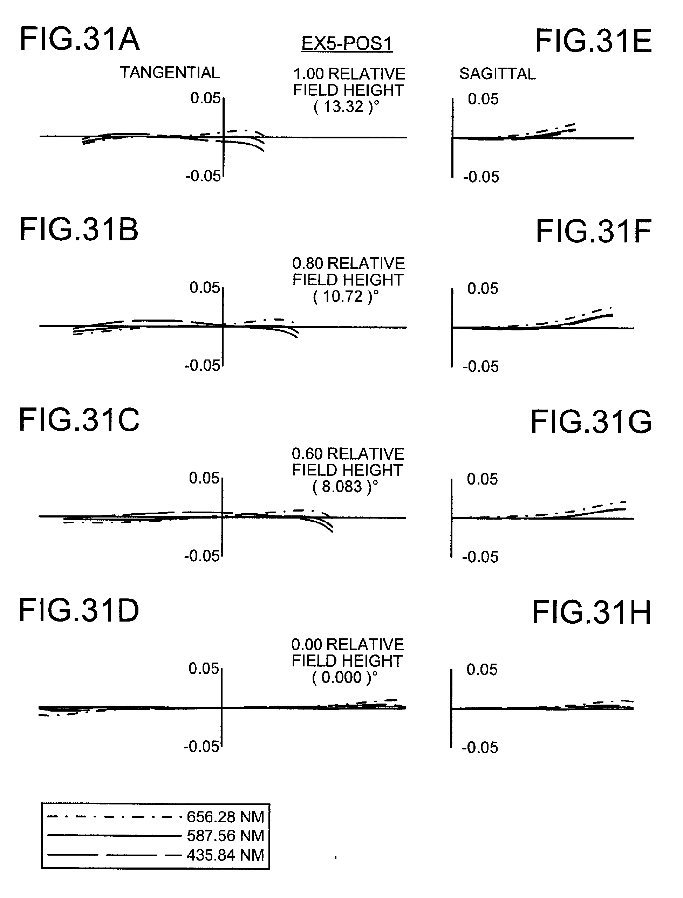

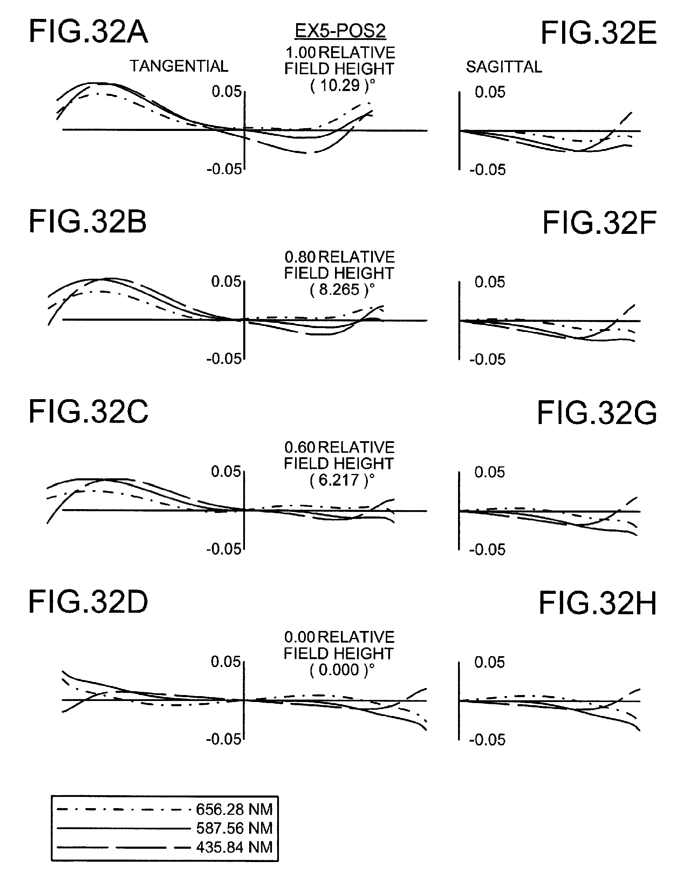

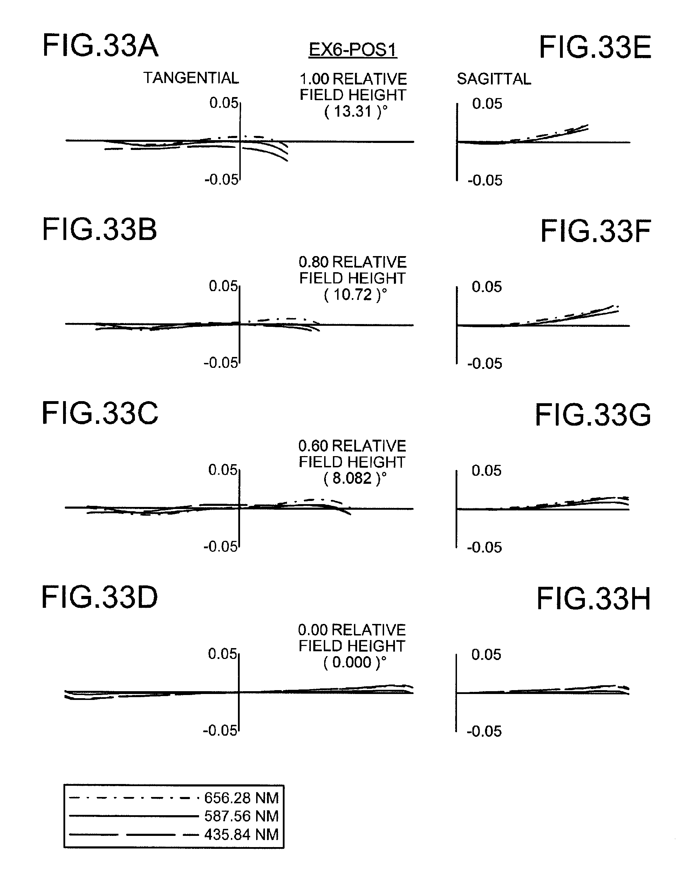

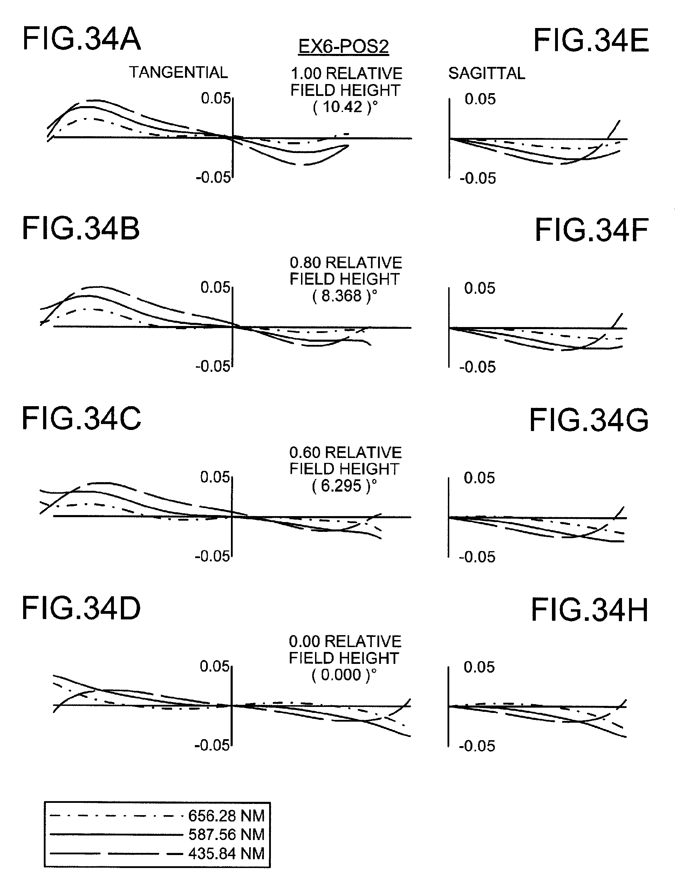

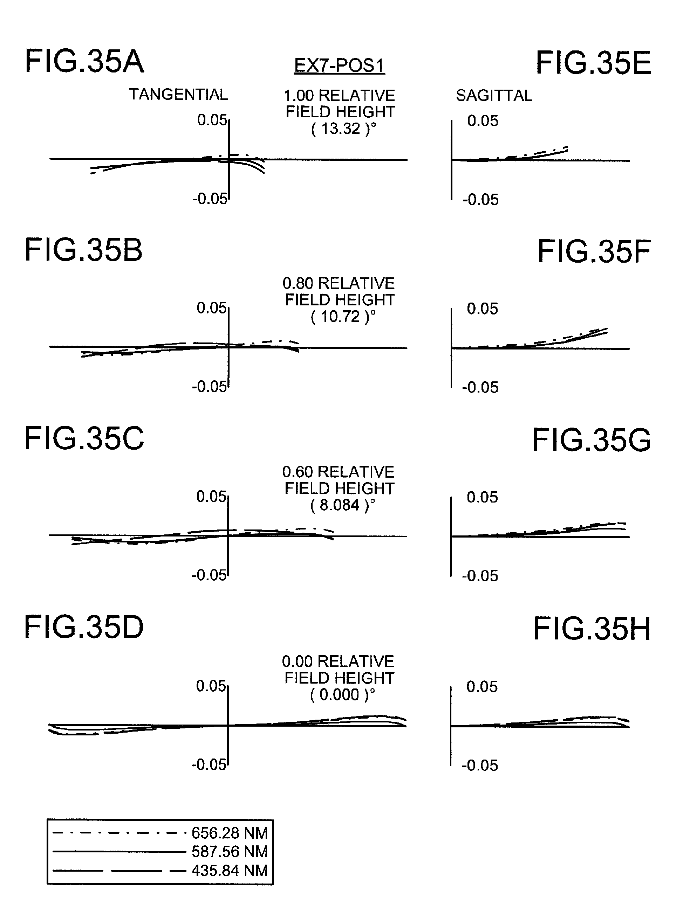

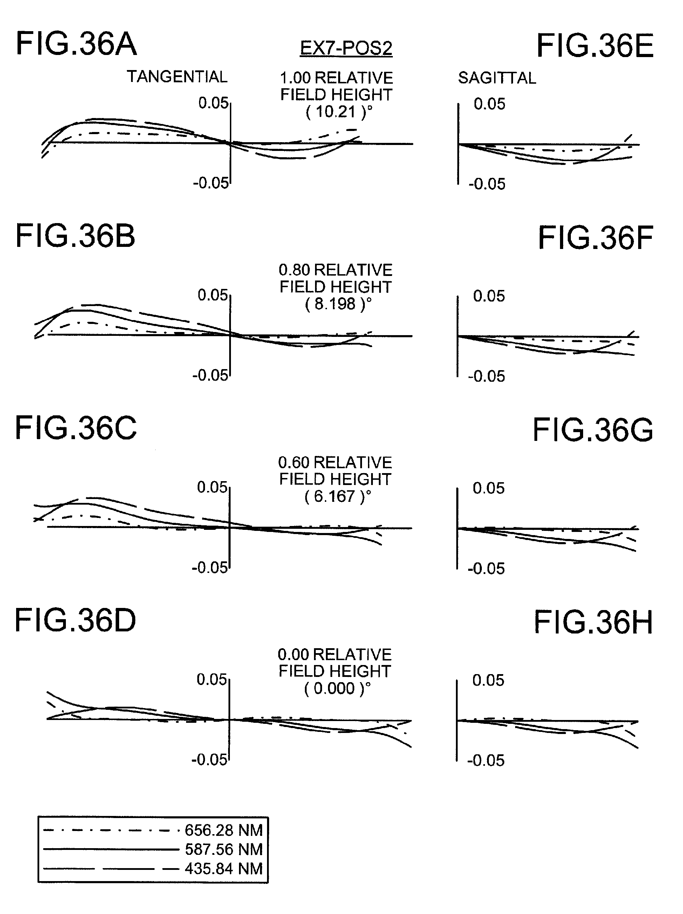

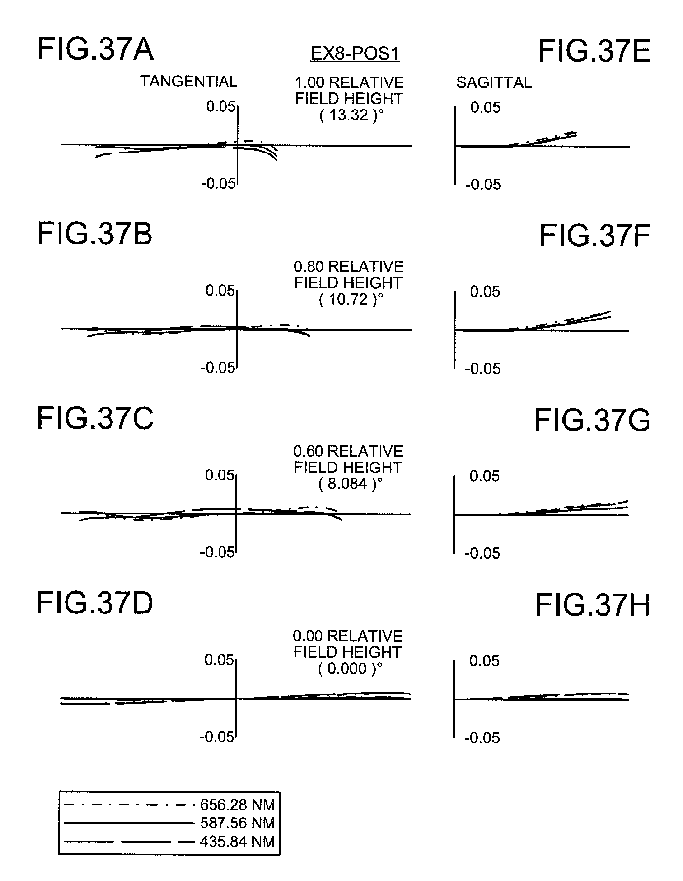

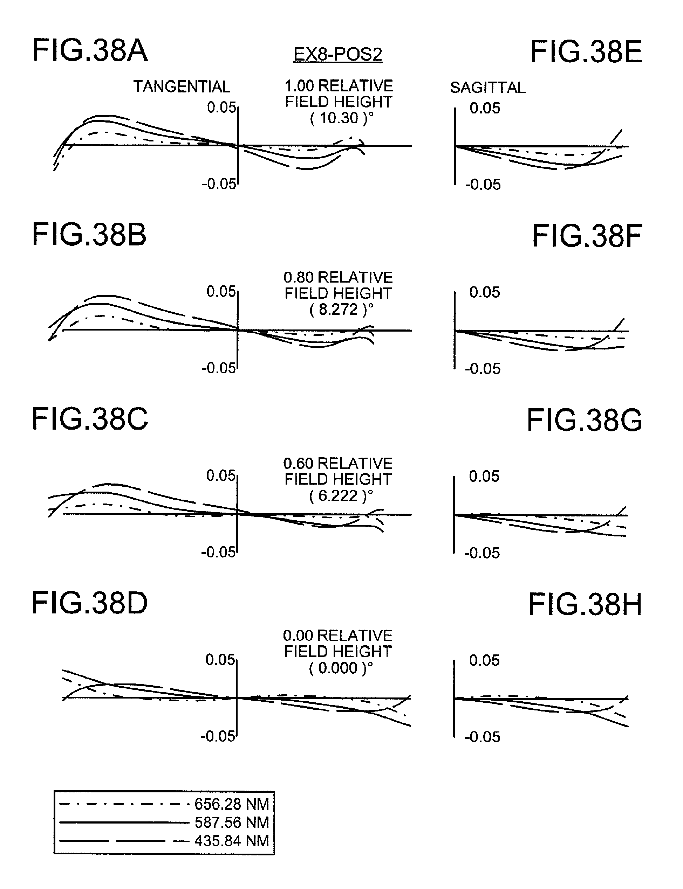

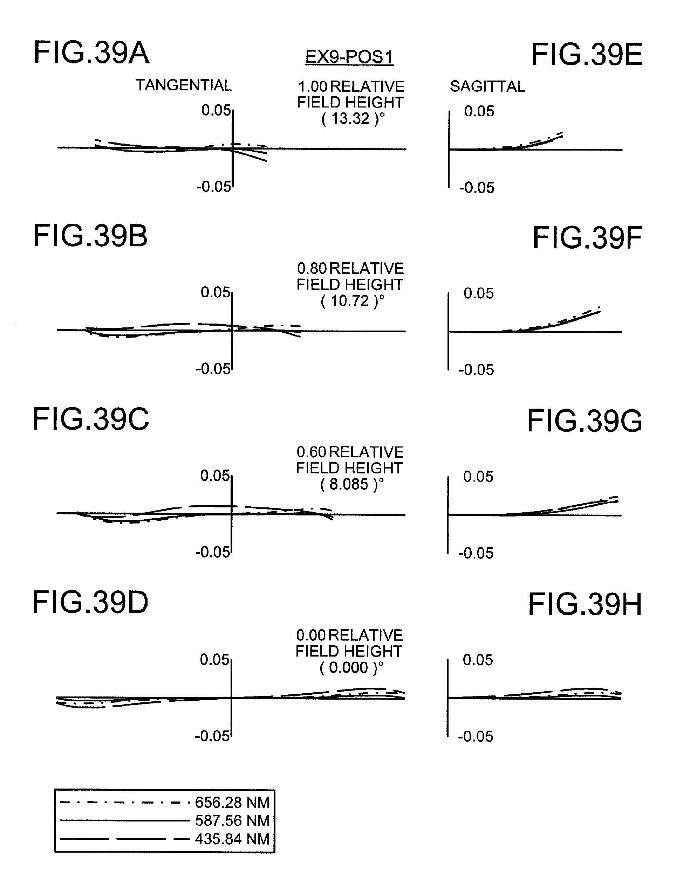

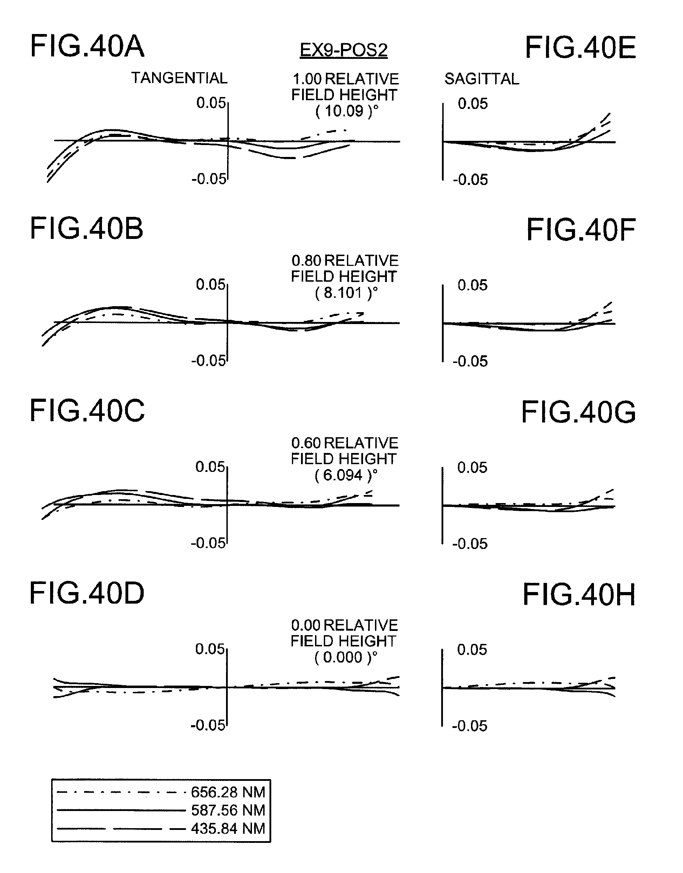

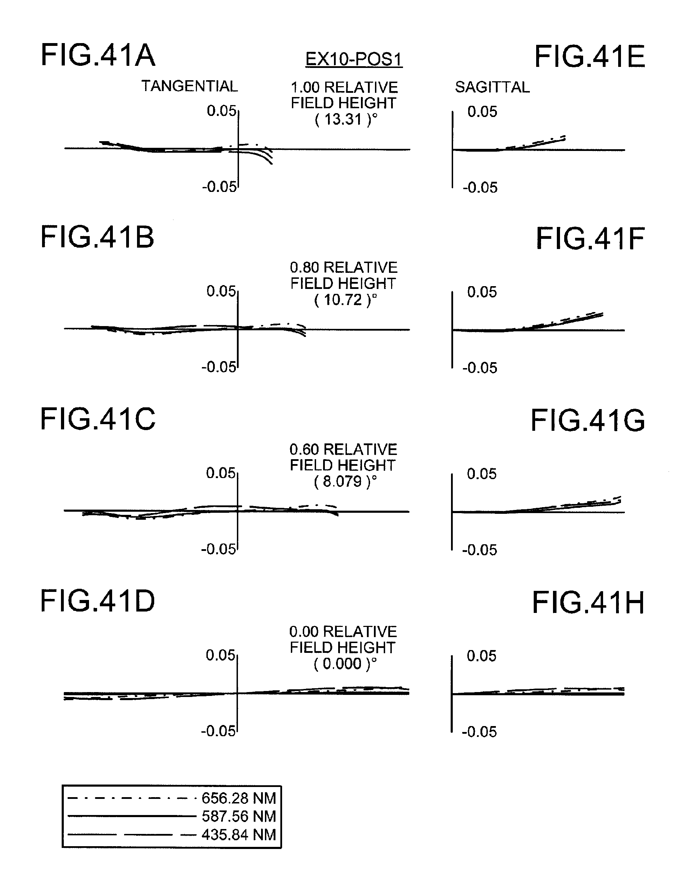

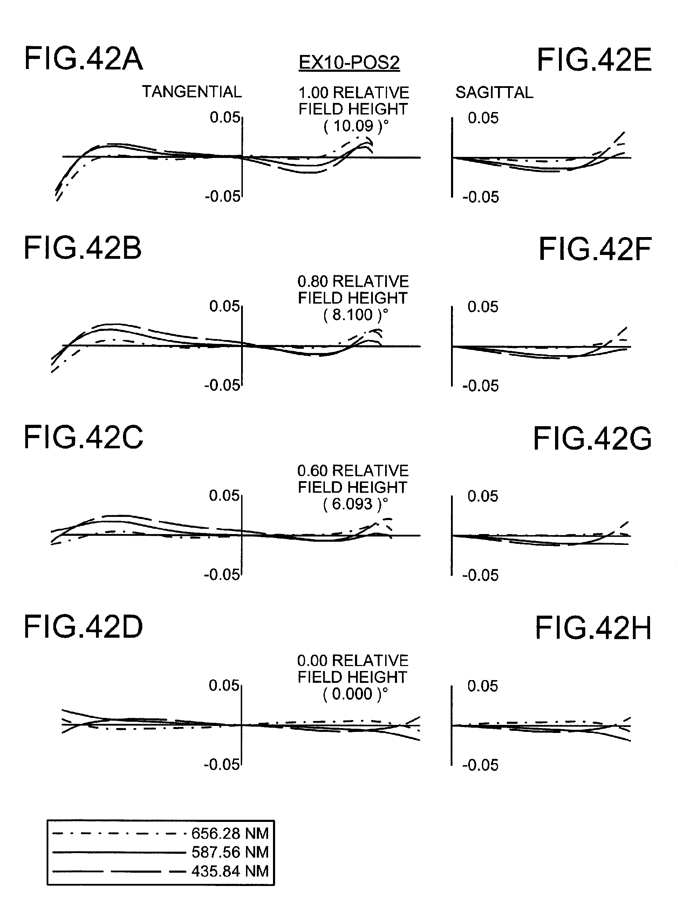

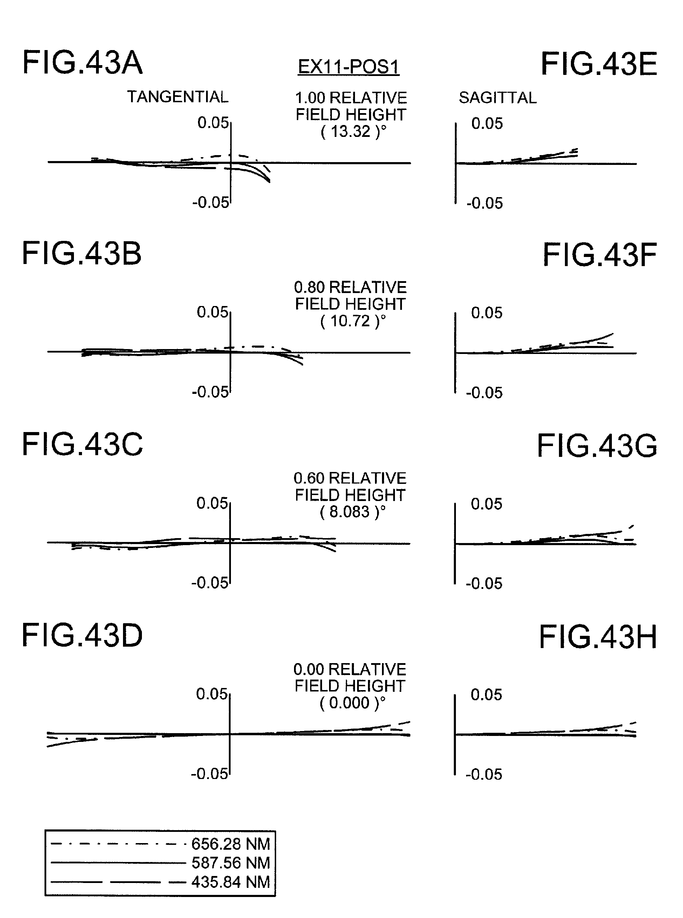

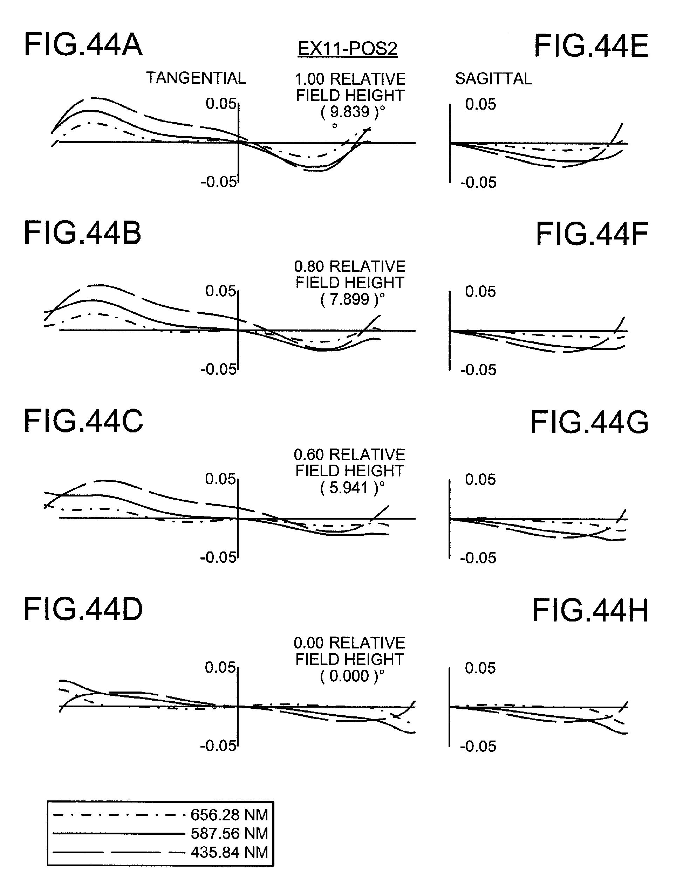

Figs. 23A-23H, Figs. 25A-25H, Figs. 27A-27H, Figs. 29A-29H, Figs. 31A-31H, Figs. 33A-33H, Figs. 35A-35H, Figs. 37A-37H, Figs. 39A-39H, Figs. 41A-41H, and Figs. 43A-43H are lateral aberration diagrams corresponding to Examples 1 to 11 (EX 1 to EX 11) respectively, each showing the lateral aberration (mm) at the first focus position POS1. Figs. 24A-24H, Figs. 26A-26H, Figs. 28A-28H, Figs. 30A-30H, Figs. 32A-32H, Figs. 34A-34H, Figs. 36A-36H, Figs. 38A-38H, Figs. 40A-40H, Figs. 42A-42H, and Figs. 44A-44H are lateral aberration diagrams corresponding to Examples 1 to 11 (EX 1 to EX 11) respectively, each showing the lateral aberration (mm) at the second focus position POS2.

Of Figs. 23A-23H to 44A-44H, those suffixed with "A" to "D" show lateral aberration in tangential rays, and those suffixed with "E" to "H" show lateral aberration in sagittal rays. In these diagrams, a solid line, a dash-and-dot line, and a broken like indicate the lateral aberration for the d-line (with a wavelength of 587.56 nm), the C-line (with a wavelength of 656.28 nm), and the g-line (with a wavelength of 435.84 nm), respectively, as observed at different image height ratios (half angles of view ω°) given as "RELATIVE FIELD HEIGHT". An image height ratio is a relative image height given by normalizing an image height with respect to the maximum image height y'max.

EXAMPLE 1

Unit:mm
Surface Data

| i | r | d | nd | vd |
|---|---|---|---|---|
| object | infinity | variable | | |
| 1 | -250.000 | 2.700 | 1.51680 | 64.20 |
| 2 | 84.770 | 1.567 | | |
| 3 | 54.179 | 6.000 | 1.83481 | 42.72 |
| 4 | -89.059 | 6.627 | | |
| 5 | -50.026 | 2.153 | 1.67270 | 32.17 |
| 6 | 90.606 | 3.968 | | |
| 7 (stop) | infinity | variable | | |
| 8 | 24.953 | 5.000 | 1.61800 | 63.39 |
| 9 | -38.260 | 1.882 | | |
| 10 | -26.200 | 1.500 | 1.90366 | 31.31 |
| 11 | -989.159 | 5.938 | | |
| 12* | 435.156 | 3.500 | 1.74320 | 49.29 |
| 13* | -26.600 | variable | | |
| 14 | 199.156 | 2.379 | 1.92286 | 20.88 |
| 15 | -60.448 | 1.112 | | |
| 16 | -65.917 | 0.900 | 1.68893 | 31.16 |
| 17 | 20.023 | 12.414 | | |
| 18 | -17.519 | 0.900 | 1.49700 | 81.61 |
| 19 | -140.573 | 0.500 | | |
| 20 | 44.924 | 4.673 | 1.72916 | 54.67 |
| 21 | -86.724 | 13.661 | | |
| 22 | infinity | 1.500 | 1.52249 | 59.48 |
| 23 | infinity | 0.800 | | |
| image | infinity | | | |

Aspherical Surface Data

| i | K | A4 | A6 |
|---|---|---|---|
| 12 | 0.0000e+000 | -3.1749e-005 | -2.9709e-007 |
| | A8 | A10 | A12 |
| | 2.8371e-009 | -2.1102e-011 | 0.0000e+000 |

(continued)

Aspherical Surface Data

| A14 | A16 |
| --- | --- |
| 0.0000e+000 | 0.0000e+000 |

Aspherical Surface Data

| i | K | A4 | A6 |
| --- | --- | --- | --- |
| 13 | 0.0000e+000 | -1.1135e-005 | -2.7257e-007 |

| A8 | A10 | A12 |
| --- | --- | --- |
| 2.5140e-009 | -1.7858e-011 | 0.0000e+000 |

| A14 | A16 |
| --- | --- |
| 0.0000e+000 | 0.0000e+000 |

Miscellaneous Data

| | POS1 | POS2 |
| --- | --- | --- |
| | infinity | $\beta=-0.5$ |
| F1 | 59.997 | 44.432 |
| Fno. | 2.900 | 3.565 |
| $\omega$ | 13.316 | 11.080 |
| y'max | 14.200 | 14.200 |
| TL | 95.158 | 95.158 |
| BF | 15.446 | 15.446 |
| object | infinity | 123.973 |
| d7 | 13.497 | 3.433 |
| d13 | 2.503 | 12.567 |

Lens Group Data

| Group | (surface) | Focal length |
| --- | --- | --- |
| 1 | ( 1- 7) | -640.046 |
| 2 | ( 8- 13) | 29.914 |
| 3 | (14- 23) | -46.661 |

EXAMPLE 2

Unit:mm
Surface Data

| i | r | d | nd | vd |
| --- | --- | --- | --- | --- |
| object | infinity | variable | | |
| 1 | 84.513 | 2.700 | 1.84666 | 23.78 |
| 2 | 216.412 | 11.576 | | |
| 3 | 59.074 | 3.022 | 1.72916 | 54.67 |
| 4 | -167.360 | 1.130 | | |
| 5 | -141.496 | 1.000 | 1.69895 | 30.05 |
| 6 | 36.131 | 2.572 | | |
| 7 (stop) | infinity | variable | | |
| 8 | 18.924 | 3.605 | 1.49700 | 81.61 |
| 9 | 65.301 | 3.340 | | |

(continued)

Unit:mm
Surface Data

| i | r | d | nd | vd |
|---|---|---|---|---|
| 10 | -35.608 | 1.500 | 1.80518 | 25.46 |
| 11 | -196.854 | 5.045 | | |
| 12* | 43.555 | 3.500 | 1.74320 | 49.29 |
| 13* | -38.059 | variable | | |
| 14 | -94.565 | 1.983 | 1.92286 | 20.88 |
| 15 | -45.968 | 0.500 | | |
| 16 | 221.281 | 0.900 | 1.51823 | 58.96 |
| 17 | 19.330 | 11.080 | | |
| 18 | -14.484 | 1.170 | 1.60342 | 38.01 |
| 19 | -115.941 | 0.500 | | |
| 20 | 48.336 | 4.164 | 1.72916 | 54.67 |
| 21 | -93.147 | 13.383 | | |
| 22 | infinity | 1.500 | 1.52249 | 59.48 |
| 23 | infinity | 0.800 | | |
| image | infinity | | | |

Aspherical Surface Data

| i | K | A4 | A6 |
|---|---|---|---|
| 12 | 0.0000e+000 | -1.5281e-005 | -1.8413e-007 |
| | A8 | A10 | A12 |
| | 1.5087e-009 | -8.9865e-012 | 0.0000e+000 |
| | A14 | A16 | |
| | 0.0000e+000 | 0.0000e+000 | |

Aspherical Surface Data

| i | K | A4 | A6 |
|---|---|---|---|
| 13 | 0.0000e+000 | 5.9082e-006 | -1.8185e-007 |
| | A8 | A10 | A12 |
| | 1.5183e-009 | -8.8344e-012 | 0.0000e+000 |
| | A14 | A16 | |
| | 0.0000e+000 | 0.0000e+000 | |

Miscellaneous Data

| | POS1 | POS2 |
|---|---|---|
| | infinity | $\beta=-0.5$ |
| F1 | 59.971 | 40.665 |
| Fno. | 2.900 | 3.410 |
| $\omega$ | 13.321 | 11.368 |
| y'max | 14.200 | 14.200 |
| TL | 90.200 | 90.200 |
| BF | 15.168 | 15.168 |
| object | infinity | 118.833 |
| d7 | 12.798 | 2.743 |
| d13 | 2.946 | 13.001 |

Lens Group Data

| Group | (surface) | Focal length |
|---|---|---|
| 1 | ( 1- 7) | 1620.121 |
| 2 | ( 8- 13) | 29.686 |
| 3 | ( 14- 23) | -37.256 |

EXAMPLE 3

Unit:mm
Surface Data

| i | r | d | nd | vd |
|---|---|---|---|---|
| object | infinity | variable | | |
| 1 | 126.389 | 2.700 | 1.84666 | 23.78 |
| 2 | 309.343 | 14.591 | | |
| 3 | -280.407 | 4.119 | 1.77250 | 49.62 |
| 4 | -36.706 | 2.010 | 1.68893 | 31.16 |
| 5 | 574.000 | 1.580 | | |
| 6 (stop) | infinity | variable | | |
| 7 | 20.814 | 3.256 | 1.49700 | 81.61 |
| 8 | 68.240 | 4.005 | | |
| 9 | -31.012 | 1.546 | 1.84666 | 23.78 |
| 10 | -53.146 | 5.716 | | |
| 11* | 57.810 | 4.200 | 1.58313 | 59.38 |
| 12* | -32.028 | variable | | |
| 13 | 457.874 | 3.406 | 1.83481 | 42.72 |
| 14 | -26.113 | 1.010 | 1.48749 | 70.44 |
| 15 | 19.261 | 9.334 | | |
| 16 | -14.631 | 1.500 | 1.83481 | 42.72 |
| 17 | -38.567 | 0.500 | | |
| 18 | 38.262 | 3.757 | 1.49700 | 81.61 |
| 19 | -631.379 | 13.382 | | |
| 20 | infinity | 1.500 | 1.52249 | 59.48 |
| 21 | infinity | 0.800 | | |
| image | infinity | | | |

Aspherical Surface Data

| i | K | A4 | A6 |
|---|---|---|---|
| 11 | 0.0000e+000 | -2.1720e-005 | -7.1469e-008 |
| | A8 | A10 | A12 |
| | -1.1084e-010 | 3.0713e-012 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | 1.9694e-006 | -8.9543e-008 |
| | A8 | A10 | A12 |

(continued)

Aspherical Surface Data

| | | |
|---|---|---|
| 2.1674e-010 | 1.5476e-012 | 0.0000e+000 |
| A14 | A16 | |
| 0.0000e+000 | 0.0000e+000 | |

Miscellaneous Data

| | POS1 | POS2 |
|---|---|---|
| | infinity | $\beta$=-0.5 |
| F1 | 59.956 | 38.308 |
| Fno. | 2.900 | 3.442 |
| $\omega$ | 13.324 | 11.634 |
| y'max | 14.200 | 14.200 |
| TL | 93.697 | 93.697 |
| BF | 15.168 | 15.168 |
| object | infinity | 114.975 |
| d6 | 12.798 | 2.720 |
| d12 | 2.502 | 12.580 |

Lens Group Data

| Group | (surface) | Focal length |
|---|---|---|
| 1 | ( 1- 6) | 412.221 |
| 2 | ( 7- 12) | 33.076 |
| 3 | ( 13- 21) | -32.501 |

EXAMPLE 4

Unit:mm

Surface Data

| i | r | d | nd | vd |
|---|---|---|---|---|
| object | infinity | variable | | |
| 1 | 107.409 | 2.700 | 1.84666 | 23.78 |
| 2 | 521.550 | 6.332 | | |
| 3 | -392.530 | 4.069 | 1.72916 | 54.67 |
| 4 | -40.556 | 1.994 | 1.64769 | 33.84 |
| 5 | 114.868 | 1.904 | | |
| 6 (stop) | infinity | variable | | |
| 7 | 21.280 | 4.455 | 1.49700 | 81.61 |
| 8 | -122.021 | 3.311 | | |
| 9 | -33.359 | 0.900 | 1.80610 | 33.27 |
| 10 | 171.235 | 6.632 | | |
| 11* | 41.619 | 4.200 | 1.58313 | 59.38 |
| 12* | -28.036 | variable | | |
| 13 | 209.851 | 3.240 | 1.91082 | 35.25 |
| 14 | -31.035 | 1.010 | 1.51823 | 58.96 |
| 15 | 18.724 | 10.189 | | |
| 16 | -15.096 | 0.900 | 1.83481 | 42.72 |
| 17 | -43.204 | 0.400 | | |

(continued)

Unit:mm

Surface Data

| i | r | d | nd | vd |
|---|---|---|---|---|
| 18 | 37.304 | 3.745 | 1.49700 | 81.61 |
| 19 | -615.928 | 13.410 | | |
| 20 | infinity | 1.500 | 1.52249 | 59.48 |
| 21 | infinity | 0.800 | | |
| image | infinity | | | |

Aspherical Surface Data

| i | K | A4 | A6 |
|---|---|---|---|
| 11 | 0.0000e+000 | -2.0390e-005 | -1.8481e-008 |
| | A8 | A10 | A12 |
| | -4.8630e-010 | 3.3557e-012 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | 6.5521e-006 | -2.1184e-008 |
| | A8 | A10 | A12 |
| | -5.0560e-010 | 3.3463e-012 | 0.0000e+000 |
| | A14 | A16 | |
| | 0.0000e+000 | 0.0000e+000 | |

Miscellaneous Data

| | POS1 | POS2 |
|---|---|---|
| | infinity | $\beta=-0.5$ |
| F1 | 59.987 | 37.987 |
| Fno. | 2.900 | 3.458 |
| $\omega$ | 13.318 | 11.625 |
| y'max | 14.200 | 14.200 |
| TL | 86.477 | 86.477 |
| BF | 15.195 | 15.195 |
| object | infinity | 123.736 |
| d6 | 12.799 | 2.751 |
| d12 | 2.501 | 12.549 |

Lens Group Data

| Group | (surface) | Focal length |
|---|---|---|
| 1 | ( 1- 6) | 866.352 |
| 2 | ( 7- 12) | 32.707 |
| 3 | ( 13- 21) | -30.775 |

EXAMPLE 5

Unit:mm
Surface Data

| i | r | d | nd | vd |
|---|---|---|---|---|
| object | infinity | variable | | |
| 1 | 374.522 | 2.700 | 1.84666 | 23.78 |
| 2 | -738.318 | 5.070 | | |
| 3 | -222.502 | 3.607 | 1.72916 | 54.67 |
| 4 | -61.442 | 2.010 | 1.62004 | 36.30 |
| 5 | 447.941 | 1.614 | | |
| 6 (stop) | infinity | variable | | |
| 7 | 23.539 | 4.553 | 1.49700 | 81.61 |
| 8 | -121.504 | 3.805 | | |
| 9 | -31.502 | 0.900 | 1.75520 | 27.53 |
| 10 | -984.917 | 6.942 | | |
| 11* | 57.425 | 4.174 | 1.58313 | 59.38 |
| 12* | -28.060 | variable | | |
| 13 | 181.353 | 3.260 | 1.90366 | 31.31 |
| 14 | -34.251 | 1.010 | 1.51823 | 58.96 |
| 15 | 19.810 | 11.439 | | |
| 16 | -16.095 | 0.900 | 1.91082 | 35.25 |
| 17 | -45.010 | 0.400 | | |
| 18 | 38.352 | 3.734 | 1.49700 | 81.61 |
| 19 | -617.813 | 13.403 | | |
| 20 | infinity | 1.500 | 1.52249 | 59.48 |
| 21 | infinity | 0.800 | | |
| image | infinity | | | |

Aspherical Surface Data

| i | K | A4 | A6 |
|---|---|---|---|
| 11 | 0.0000e+000 | -1.5635e-005 | -7.5185e-008 |
| | A8 | A10 | A12 |
| | 2.5016e-010 | -3.1400e-013 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | 7.0079e-006 | -9.0624e-008 |
| | A8 | A10 | A12 |
| | 4.0464e-010 | -9.7549e-013 | 0.0000e+000 |
| | A14 | A16 | |
| | 0.0000e+000 | 0.0000e+000 | |

Miscellaneous Data

|  | POS1 | POS2 |
|---|---|---|
|  | infinity | $\beta=-1.0$ |
| F1 | 59.994 | 27.915 |
| Fno. | 2.900 | 4.124 |
| $\omega$ | 13.316 | 10.292 |
| y'max | 14.200 | 14.200 |
| TL | 96.488 | 96.488 |
| BF | 15.188 | 15.188 |
| object | infinity | 66.414 |
| d6 | 22.681 | 2.691 |
| d12 | 2.502 | 22.492 |

Lens Group Data

| Group | (surface) | Focal length |
|---|---|---|
| 1 | ( 1- 6) | 1721.783 |
| 2 | ( 7- 12) | 33.950 |
| 3 | ( 13- 21) | -30.623 |

EXAMPLE 6

Unit:mm
Surface Data

| i | r | d | nd | vd |
|---|---|---|---|---|
| object | infinity | variable | | |
| 1 | 130.803 | 2.501 | 1.84666 | 23.78 |
| 2 | -1100.840 | 3.833 | | |
| 3 | -69.434 | 2.500 | 1.90366 | 31.31 |
| 4 | 228.843 | 1.570 | | |
| 5* | 500.000 | 3.515 | 1.58313 | 59.38 |
| 6* | -60.647 | 1.500 | | |
| 7 (stop) | infinity | variable | | |
| 8 | 22.675 | 4.800 | 1.49700 | 81.61 |
| 9 | -126.564 | 4.888 | | |
| 10 | -29.699 | 0.900 | 1.90366 | 31.31 |
| 11 | -386.711 | 5.201 | | |
| 12* | 62.086 | 4.400 | 1.58313 | 59.38 |
| 13* | -24.314 | variable | | |
| 14 | 223.088 | 3.259 | 1.91082 | 35.25 |
| 15 | -33.557 | 0.910 | 1.51680 | 64.20 |
| 16 | 18.146 | 11.081 | | |
| 17 | -15.009 | 0.900 | 1.59551 | 39.22 |
| 18 | -88.321 | 0.400 | | |
| 19 | 32.703 | 4.197 | 1.49700 | 81.61 |
| 20 | -659.706 | 13.383 | | |
| 21 | infinity | 1.500 | 1.52249 | 59.48 |
| 22 | infinity | 0.800 | | |
| image | infinity | | | |

Aspherical Surface Data

| i | K | A4 | A6 |
|---|---|----|----|
| 5 | 0.0000e+000 | 2.4046e-006 | 8.1816e-009 |

| | A8 | A10 | A12 |
|---|----|-----|-----|
| | 1.2688e-010 | -1.5461e-013 | 0.0000e+000 |

| | A14 | A16 |
|---|-----|-----|
| | 0.0000e+000 | 0.0000e+000 |

Aspherical Surface Data

| i | K | A4 | A6 |
|---|---|----|----|
| 6 | 0.0000e+000 | 1.9656e-006 | -2.5517e-009 |

| | A8 | A10 | A12 |
|---|----|-----|-----|
| | 1.9423e-010 | -2.8953e-013 | 0.0000e+000 |

| | A14 | A16 |
|---|-----|-----|
| | 0.0000e+000 | 0.0000e+000 |

Aspherical Surface Data

| i | K | A4 | A6 |
|---|---|----|----|
| 12 | 0.0000e+000 | -1.9987e-005 | -6.3215e-008 |

| | A8 | A10 | A12 |
|---|----|-----|-----|
| | 8.3840e-011 | 1.1271e-012 | 0.0000e+000 |

| | A14 | A16 |
|---|-----|-----|
| | 0.0000e+000 | 0.0000e+000 |

Aspherical Surface Data

| i | K | A4 | A6 |
|---|---|----|----|
| 13 | 0.0000e+000 | 6.6536e-006 | -5.2737e-008 |

| | A8 | A10 | A12 |
|---|----|-----|-----|
| | -4.9313e-011 | 1.3646e-012 | 0.0000e+000 |

| | A14 | A16 |
|---|-----|-----|
| | 0.0000e+000 | 0.0000e+000 |

Miscellaneous Data

| | POS1 | POS2 |
|---|------|------|
| | infinity | $\beta$=-1.0 |
| F1 | 60.003 | 28.754 |
| Fno. | 2.900 | 4.041 |
| $\omega$ | 13.314 | 10.421 |
| y'max | 14.200 | 14.200 |
| TL | 96.468 | 96.468 |
| BF | 15.168 | 15.168 |
| object | infinity | 65.155 |
| d7 | 22.445 | 2.673 |
| d13 | 2.501 | 22.273 |

Lens Group Data

| Group | (surface) | Focal length |
|---|---|---|
| 1 | ( 1- 7) | 605.507 |
| 2 | ( 8- 13) | 34.967 |
| 3 | ( 14- 22) | -33.133 |

EXAMPLE 7

Unit:mm

Surface Data

| i | r | d | nd | vd |
|---|---|---|---|---|
| object | infinity | variable | | |
| 1 | 131.437 | 3.000 | 1.84666 | 23.78 |
| 2 | -358.789 | 5.004 | | |
| 3 | -99.431 | 3.902 | 1.83481 | 42.72 |
| 4 | -35.419 | 2.010 | 1.69895 | 30.05 |
| 5 | 181.403 | 1.762 | | |
| 6 (stop) | infinity | variable | | |
| 7 | 23.872 | 4.800 | 1.49700 | 81.61 |
| 8 | -61.273 | 3.104 | | |
| 9 | -26.595 | 1.400 | 1.80610 | 33.27 |
| 10 | -743.492 | 5.595 | | |
| 11* | 61.196 | 4.400 | 1.58313 | 59.38 |
| 12* | -24.074 | variable | | |
| 13* | 140.924 | 3.472 | 1.80860 | 40.42 |
| 14 | -30.719 | 1.010 | 1.51680 | 64.20 |
| 15 | 17.714 | 11.245 | | |
| 16 | -15.622 | 0.900 | 1.65844 | 50.85 |
| 17 | -61.714 | 0.400 | | |
| 18 | 32.834 | 4.208 | 1.49700 | 81.61 |
| 19 | -668.651 | 13.368 | | |
| 20 | infinity | 1.500 | 1.52249 | 59.48 |
| 21 | infinity | 0.800 | | |
| image | infinity | | | |

Aspherical Surface Data

| i | K | A4 | A6 |
|---|---|---|---|
| 11 | 0.0000e+000 | -2.1884e-005 | 1.1964e-008 |
| | A8 | A10 | A12 |
| | -4.0141e-010 | 2.1539e-012 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | 3.0123e-006 | 2.1963e-008 |
| | A8 | A10 | A12 |
| | -5.4003e-010 | 2.4258e-012 | 0.0000e+000 |

(continued)

Aspherical Surface Data

| A14 | A16 |
|---|---|
| 0.0000e+000 | 0.0000e+000 |

Aspherical Surface Data

| i | K | A4 | A6 |
|---|---|---|---|
| 13 | 0.0000e+000 | -1.4598e-006 | 4.1547e-008 |
| | A8 | A10 | A12 |
| | -4.6669e-010 | 1.6784e-012 | 0.0000e+000 |
| | A14 | A16 | |
| | 0.0000e+000 | 0.0000e+000 | |

Miscellaneous Data

| | POS1 | POS2 |
|---|---|---|
| | infinity | $\beta$=-1.0 |
| F1 | 59.984 | 29.168 |
| Fno. | 2.900 | 4.120 |
| $\omega$ | 13.318 | 10.208 |
| y'max | 14.200 | 14.200 |
| TL | 96.453 | 96.453 |
| BF | 15.153 | 15.153 |
| object | infinity | 66.173 |
| d6 | 22.588 | 2.671 |
| d12 | 2.501 | 22.418 |

Lens Group Data

| Group | (surface) | Focal length |
|---|---|---|
| 1 | ( 1- 6) | 1188.496 |
| 2 | ( 7- 12) | 32.609 |
| 3 | (13- 21) | -33.556 |

EXAMPLE 8

Unit:mm
Surface Data

| i | r | d | nd | vd |
|---|---|---|---|---|
| object | infinity | variable | | |
| 1 | 165.140 | 3.500 | 1.84666 | 23.78 |
| 2 | -561.184 | 3.968 | | |
| 3* | -100.788 | 4.105 | 1.80860 | 40.42 |
| 4 | -32.199 | 1.943 | 1.68893 | 31.16 |
| 5 | 558.123 | 1.590 | | |
| 6 (stop) | infinity | variable | | |
| 7 | 23.740 | 5.000 | 1.49700 | 81.61 |
| 8 | -52.839 | 2.943 | | |
| 9 | -26.170 | 0.900 | 1.80610 | 33.27 |

(continued)

Unit:mm

Surface Data

| i | r | d | nd | vd |
|---|---|---|---|---|
| 10 | -2126.687 | 6.058 | | |
| 11* | 74.871 | 4.400 | 1.58313 | 59.38 |
| 12* | -23.652 | variable | | |
| 13 | 221.465 | 3.208 | 1.91082 | 35.25 |
| 14 | -33.859 | 1.010 | 1.51823 | 58.96 |
| 15 | 18.889 | 11.428 | | |
| 16 | -15.768 | 0.900 | 1.78590 | 43.93 |
| 17 | -50.168 | 0.300 | | |
| 18 | 34.252 | 4.035 | 1.49700 | 81.61 |
| 19 | -645.440 | 13.388 | | |
| 20 | infinity | 1.500 | 1.52249 | 59.48 |
| 21 | infinity | 0.800 | | |
| image | infinity | | | |

Aspherical Surface Data

| i | K | A4 | A6 |
|---|---|---|---|
| 3 | 0.0000e+000 | -6.2651e-007 | 5.9844e-009 |
| | A8 | A10 | A12 |
| | -2.7941e-011 | 0.0000e+000 | 0.0000e+000 |
| | A14 | A16 | |
| | 0.0000e+000 | 0.0000e+000 | |

Aspherical Surface Data

| i | K | A4 | A6 |
|---|---|---|---|
| 11 | 0.0000e+000 | -1.9551e-005 | -2.9875e-008 |
| | A8 | A10 | A12 |
| | -2.6668e-010 | 3.2051e-012 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | 4.3201e-006 | -1.7462e-008 |
| | A8 | A10 | A12 |
| | -4.0845e-010 | 3.3620e-012 | 0.0000e+000 |
| | A14 | A16 | |
| | 0.0000e+000 | 0.0000e+000 | |

Miscellaneous Data

| | POS1 | POS2 |
|---|---|---|
| | infinity | $\beta=-1.0$ |
| F1 | 59.985 | 28.439 |
| Fno. | 2.900 | 4.116 |

(continued)

Miscellaneous Data

|  | POS1 | POS2 |
|---|---|---|
| ω | 13.318 | 10.301 |
| y'max | 14.200 | 14.200 |
| TL | 95.473 | 95.473 |
| BF | 15.173 | 15.173 |
| object | infinity | 66.760 |
| d6 | 22.512 | 2.675 |
| d12 | 2.501 | 22.337 |

Lens Group Data

| Group | (surface) | Focal length |
|---|---|---|
| 1 | ( 1- 6) | 775.483 |
| 2 | ( 7- 12) | 33.539 |
| 3 | ( 13- 21) | -32.241 |

EXAMPLE 9

Unit:mm
Surface Data

| i | r | d | nd | vd |
|---|---|---|---|---|
| object | infinity | variable |  |  |
| 1 | 123.775 | 3.380 | 1.84666 | 23.78 |
| 2 | -469.026 | 2.899 |  |  |
| 3* | -103.089 | 3.722 | 1.58313 | 59.38 |
| 4* | -38.467 | 1.473 |  |  |
| 5 | -38.636 | 2.000 | 1.68893 | 31.16 |
| 6 | 1787.871 | 1.526 |  |  |
| 7 (stop) | infinity | variable |  |  |
| 8 | 27.241 | 5.400 | 1.43700 | 95.10 |
| 9 | -29.604 | 2.951 |  |  |
| 10 | -19.493 | 0.900 | 1.80610 | 33.27 |
| 11 | -45.546 | 5.194 |  |  |
| 12* | -502.215 | 4.400 | 1.58313 | 59.38 |
| 13* | -20.577 | variable |  |  |
| 14 | -814.440 | 3.066 | 1.91082 | 35.25 |
| 15 | -31.270 | 1.010 | 1.51742 | 52.15 |
| 16 | 19.473 | 12.475 |  |  |
| 17 | -15.039 | 0.900 | 1.56883 | 56.04 |
| 18 | -95.771 | 0.300 |  |  |
| 19 | 38.336 | 4.047 | 1.72916 | 54.67 |
| 20 | -721.431 | 13.369 |  |  |
| 21 | infinity | 1.500 | 1.52249 | 59.48 |
| 22 | infinity | 0.800 |  |  |
| image | infinity |  |  |  |

Aspherical Surface Data

| i | K | A4 | A6 |
|---|---|---|---|
| 3 | 0.0000e+000 | 5.4249e-006 | 6.0883e-009 |
| | A8 | A10 | A12 |
| | -6.9548e-012 | 0.0000e+000 | 0.0000e+000 |
| | A14 | A16 | |
| | 0.0000e+000 | 0.0000e+000 | |

Aspherical Surface Data

| i | K | A4 | A6 |
|---|---|---|---|
| | 0.0000e+000 | 0.0000e+000 | 0.0000e+000 |
| | A8 | A10 | A12 |
| 4 | 0.0000e+000 | 6.7595e-006 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | -1.8527e-005 | -1.5091e-007 |
| | A8 | A10 | A12 |
| | 1.2319e-009 | -5.6523e-012 | 0.0000e+000 |
| | A14 | A16 | |
| | 0.0000e+000 | 0.0000e+000 | |

Aspherical Surface Data

| i | K | A4 | A6 |
|---|---|---|---|
| 13 | 0.0000e+000 | 4.5088e-006 | -1.3825e-007 |
| | A8 | A10 | A12 |
| | 1.1438e-009 | -5.2275e-012 | 0.0000e+000 |
| | A14 | A16 | |
| | 0.0000e+000 | 0.0000e+000 | |

Miscellaneous Data

| | POS1 | POS2 |
|---|---|---|
| | infinity | $\beta=-1.0$ |
| F1 | 59.979 | 30.258 |
| Fno. | 2.900 | 4.148 |
| $\omega$ | 13.319 | 10.088 |
| y'max | 14.200 | 14.200 |
| TL | 96.454 | 96.454 |
| BF | 15.154 | 15.154 |
| object | infinity | 67.497 |
| d7 | 23.096 | 3.050 |
| d13 | 2.561 | 22.608 |

Lens Group Data

| Group | (surface) | Focal length |
|---|---|---|
| 1 | ( 1- 7) | 1364.623 |
| 2 | ( 8- 13) | 32.315 |
| 3 | (14- 22) | -36.162 |

EXAMPLE 10

Unit:mm

Surface Data

| i | r | d | nd | vd |
|---|---|---|---|---|
| object | infinity | variable | | |
| 1 | 81.103 | 3.414 | 1.84666 | 23.78 |
| 2 | 540.000 | 3.198 | | |
| 3* | -100.000 | 3.329 | 1.74320 | 49.29 |
| 4* | -53.284 | 1.263 | | |
| 5 | -70.681 | 2.000 | 1.76182 | 26.61 |
| 6 | 156.110 | 1.796 | | |
| 7 (stop) | infinity | variable | | |
| 8 | 23.662 | 5.001 | 1.43700 | 95.10 |
| 9 | -50.611 | 2.947 | | |
| 10 | -24.264 | 0.900 | 1.80610 | 33.27 |
| 11 | -89.560 | 5.306 | | |
| 12* | 88.323 | 4.400 | 1.58313 | 59.38 |
| 13* | -23.418 | variable | | |
| 14 | 251.623 | 3.131 | 1.91082 | 35.25 |
| 15 | -36.163 | 1.010 | 1.51742 | 52.15 |
| 16 | 18.217 | 12.168 | | |
| 17 | -15.300 | 0.900 | 1.51680 | 64.20 |
| 18 | -170.806 | 0.300 | | |
| 19 | 31.259 | 4.394 | 1.49700 | 81.61 |
| 20 | -689.651 | 13.385 | | |
| 21 | infinity | 1.500 | 1.52249 | 59.48 |
| 22 | infinity | 0.800 | | |
| image | infinity | | | |

Aspherical Surface Data

| i | K | A4 | A6 |
|---|---|---|---|
| 3 | 0.0000e+000 | 2.7297e-006 | 7.9434e-009 |
| | A8 | A10 | A12 |
| | -3.0701e-011 | 0.0000e+000 | 0.0000e+000 |
| | A14 | A16 | |
| | 0.0000e+000 | 0.0000e+000 | |

Aspherical Surface Data

| i | K | A4 | A6 |
|---|---|---|---|
| 4 | 0.0000e+000 | 3.9802e-006 | 0.0000e+000 |
| | A8 | A10 | A12 |

(continued)

Aspherical Surface Data

| | | |
|---|---|---|
| 0.0000e+000 | 0.0000e+000 | 0.0000e+000 |
| A14 | A16 | |
| 0.0000e+000 | 0.0000e+000 | |

Aspherical Surface Data

| i | K | A4 | A6 |
|---|---|---|---|
| 12 | 0.0000e+000 | -1.7603e-005 | -4.7190e-008 |
| | A8 | A10 | A12 |
| | -1.3549e-010 | 2.7070e-012 | 0.0000e+000 |
| | A14 | A16 | |
| | 0.0000e+000 | 0.0000e+000 | |

Aspherical Surface Data

| i | K | A4 | A6 |
|---|---|---|---|
| 13 | 0.0000e+000 | 6.1038e-006 | -3.3740e-008 |
| | A8 | A10 | A12 |
| | -2.5443e-010 | 2.7854e-012 | 0.0000e+000 |
| | A14 | A16 | |
| | 0.0000e+000 | 0.0000e+000 | |

Miscellaneous Data

| | POS1 | POS2 |
|---|---|---|
| | infinity | $\beta$=-1.0 |
| F1 | 60.023 | 29.731 |
| Fno. | 2.900 | 4.115 |
| $\omega$ | 13.310 | 10.087 |
| y'max | 14.200 | 14.200 |
| TL | 96.228 | 96.228 |
| BF | 15.170 | 15.170 |
| object | infinity | 67.500 |
| d7 | 23.101 | 3.022 |
| d13 | 2.499 | 22.578 |

Lens Group Data

| Group | (surface) | Focal length |
|---|---|---|
| 1 | ( 1- 7) | 1895.157 |
| 2 | ( 8- 13) | 32.170 |
| 3 | ( 14- 22) | -34.663 |

EXAMPLE 11

Unit:mm
Surface Data

| i | r | d | nd | vd |
|---|---|---|---|---|
| object | infinity | variable | | |
| 1 | 124.670 | 2.369 | 1.84666 | 23.78 |
| 2 | 540.000 | 5.653 | | |
| 3* | -100.000 | 3.276 | 1.74320 | 49.29 |
| 4* | -57.348 | 1.012 | | |
| 5 | -111.684 | 1.000 | 1.75520 | 27.53 |
| 6 | 255.591 | 1.690 | | |
| 7 (stop) | infinity | variable | | |
| 8 | 18.359 | 4.151 | 1.49700 | 81.61 |
| 9 | 70.086 | 5.812 | | |
| 10 | -36.410 | 0.900 | 1.64769 | 33.84 |
| 11 | 62.622 | 1.363 | | |
| 12* | 33.376 | 4.968 | 1.58313 | 59.38 |
| 13* | -25.028 | variable | | |
| 14 | infinity | 3.045 | 1.91082 | 35.25 |
| 15 | -29.930 | 1.010 | 1.56732 | 42.84 |
| 16 | 19.666 | 12.031 | | |
| 17 | -15.319 | 0.914 | 1.49700 | 81.61 |
| 18 | -128.525 | 1.987 | | |
| 19 | 44.570 | 4.520 | 1.77250 | 49.62 |
| 20 | -127.182 | 13.401 | | |
| 21 | infinity | 1.500 | 1.52249 | 59.48 |
| 22 | infinity | 0.800 | | |
| image | infinity | | | |

Aspherical Surface Data

| i | K | A4 | A6 |
|---|---|---|---|
| 3 | 0.0000e+000 | -4.4752e-006 | 6.7198e-009 |
| | A8 | A10 | A12 |
| | -3.9968e-011 | 0.0000e+000 | 0.0000e+000 |
| | A14 | A16 | |
| | 0.0000e+000 | 0.0000e+000 | |

Aspherical Surface Data

| i | K | A4 | A6 |
|---|---|---|---|
| 4 | 0.0000e+000 | -3.5189e-006 | 0.0000e+000 |
| | A8 | A10 | A12 |
| | 0.0000e+000 | 0.0000e+000 | 0.0000e+000 |
| | A14 | A16 | |
| | 0.0000e+000 | 0.0000e+000 | |

Aspherical Surface Data

| i | K | A4 | A6 |
|---|---|---|---|
| 12 | 0.0000e+000 | -3.4855e-005 | -7.7985e-008 |
| | A8 | A10 | A12 |
| | -4.9897e-010 | 5.5958e-012 | 0.0000e+000 |

(continued)

Aspherical Surface Data

| A14 | A16 |
|---|---|
| 0.0000e+000 | 0.0000e+000 |

Aspherical Surface Data

| i | K | A4 | A6 |
|---|---|---|---|
| 13 | 0.0000e+000 | 7.6845e-006 | -4.6929e-008 |

| A8 | A10 | A12 |
|---|---|---|
| -7.8398e-010 | 6.3823e-012 | 0.0000e+000 |

| A14 | A16 |
|---|---|
| 0.0000e+000 | 0.0000e+000 |

Miscellaneous Data

| | POS1 | POS2 |
|---|---|---|
| | infinity | $\beta$=-1.0 |
| F1 | 59.995 | 34.911 |
| Fno. | 2.900 | 4.305 |
| $\omega$ | 13.316 | 9.839 |
| y'max | 14.200 | 14.200 |
| TL | 96.486 | 96.486 |
| BF | 15.186 | 15.186 |
| object | infinity | 68.986 |
| d7 | 23.100 | 2.963 |
| d13 | 2.500 | 22.637 |

Lens Group Data

| Group | (surface) | Focal length |
|---|---|---|
| 1 | ( 1- 7) | 751.205 |
| 2 | ( 8- 13) | 33.515 |
| 3 | ( 14- 22) | -51.013 |

Table 1

| Values of Conditional Formulae | Formula (1) | Formula (2) | Formula (3) | Formula (4) | Formula (5) |
|---|---|---|---|---|---|
| | $\beta$ | f2/f | f3/f | f/f1 | $\nu$dp |
| EXAMPLE 1 | -0.5 | 0.50 | -0.78 | -0.09 | 63.39 |
| EXAMPLE 2 | -0.5 | 0.50 | -0.62 | 0.04 | 81.61 |
| EXAMPLE 3 | -0.5 | 0.55 | -0.54 | 0.15 | 81.61 |
| EXAMPLE 4 | -0.5 | 0.55 | -0.51 | 0.07 | 81.61 |
| EXAMPLE 5 | -1.0 | 0.57 | -0.51 | 0.03 | 81.61 |
| EXAMPLE 6 | -1.0 | 0.58 | -0.55 | 0.10 | 81.61 |
| EXAMPLE 7 | -1.0 | 0.54 | -0.56 | 0.05 | 81.61 |
| EXAMPLE 8 | -1.0 | 0.56 | -0.54 | 0.08 | 81.61 |
| EXAMPLE 9 | -1.0 | 0.54 | -0.60 | 0.04 | 95.10 |

(continued)

| Values of Conditional Formulae | Formula (1) | Formula (2) | Formula (3) | Formula (4) | Formula (5) |
|---|---|---|---|---|---|
| | $\beta$ | f2/f | f3/f | f/f1 | $\nu$dp |
| EXAMPLE 10 | -1.0 | 0.54 | -0.58 | 0.03 | 95.10 |
| EXAMPLE 11 | -1.0 | 0.56 | -0.85 | 0.08 | 81.61 |

**Claims**

1.  A macro lens system comprising, from an object side:

    a first lens group;
    a second lens group having a positive refractive power as a whole; and a third lens group having a negative refractive power as a whole,
    wherein
    focusing from an object at infinity to an object at a close distance is achieved by moving only the second lens group toward the object side along an optical axis while keeping the first and third lens groups stationary, and conditional formulae (1) and (2) below are fulfilled:

$$\beta \leq -0.45 \qquad\qquad (1)$$

$$0.4 < f2 / f < 0.68 \qquad\qquad (2)$$

    where

    $\beta$ represents a lateral magnification with focus on a closest object;
    f2 represents a focal length of the second lens group; and
    f represents a focal length of the macro lens system as a whole with focus on an object at infinity.

2.  The macro lens system of claim 1,
    wherein conditional formula (3) below is fulfilled:

$$-1.2 < f3 / f < -0.3 \qquad\qquad (3)$$

    where

    f3 represents a focal length of the third lens group; and
    f represents the focal length of the macro lens system as a whole with focus on an object at infinity.

3.  The macro lens system of claim 1 or 2, wherein conditional formula (4) below is fulfilled:

$$-0.2 < f / f1 < 0.3 \qquad\qquad (4)$$

    where

    f1 represents a focal length of the first lens group; and
    f represents the focal length of the macro lens system as a whole with focus on an object at infinity.

4.  The macro lens system of any one of claims 1 to 3,
    wherein the second lens group includes at least one aspherical surface.

**5.** The macro lens system of any one of claims 1 to 4, wherein
a most object-side lens element in the second lens group has a positive refractive power, and
conditional formula (5) below is fulfilled:

$$\mathrm{vdp} \geq 60 \qquad\qquad\qquad (5)$$

where

vdp represents an Abbe number of the most object-side lens element in the second lens group.

**6.** The macro lens system of any one of claims 1 to 5,
wherein an aperture stop that is kept stationary during focusing is disposed between the first and second lens groups.

**7.** The macro lens system of any one of claims 1 to 6,
wherein the first lens group has a positive refractive power as a whole.

**8.** An imaging optical device comprising:

the macro lens system of any one of claims 1 to 7; and
an image sensor for converting an optical image formed on a light-receiving surface thereof into an electrical signal,
wherein the macro lens system is arranged such that an optical image of a subject is formed on the light-receiving surface of the image sensor.

**9.** A digital appliance comprising the imaging optical device of claim 8 so as to be additionally provided with at least one of a function of shooting a still image of the subject or a function of shooting a moving image of the subject.

# FIG.1

## EX1-POS1

# FIG.2

## EX2-POS1

# FIG.3

## EX3-POS1

# FIG.4

## EX4-POS1

# FIG.5

## EX5-POS1

# FIG.6

## EX6-POS1

# FIG.7

## EX7-POS1

# FIG.8

## EX8-POS1

# FIG.9

## EX9-POS1

# FIG.10

## EX10-POS1

# FIG.11

## EX11-POS1

# FIG.12A
### EX1-POS1

1.00

0.75

0.50

0.25

-0.50 -0.25  0.0  0.25  0.50
SPHERICAL
ABERRATION (mm)

```
- - - - - 656.28 NM
--------- 587.56 NM
--- --- 435.84 NM
```

# FIG.12B
### EX1-POS1

S T IMG HT
14.20

10.65

7.10

3.55

-0.50 -0.25  0.0  0.25  0.50
ASTIGMATISM (mm)

# FIG.12C
### EX1-POS1

IMG HT
14.20

10.65

7.10

3.55

-5.00 -2.50  0.0  2.50  5.00
DISTORTION (%)

# FIG.12D
### EX1-POS2

1.00

0.75

0.50

0.25

-0.50 -0.25  0.0  0.25  0.50
SPHERICAL
ABERRATION (mm)

```
- - - - - 656.28 NM
--------- 587.56 NM
--- --- 435.84 NM
```

# FIG.12E
### EX1-POS2

S T IMG HT
14.20

10.65

7.10

3.55

-0.50 -0.25  0.0  0.25  0.50
ASTIGMATISM (mm)

# FIG.12F
### EX1-POS2

IMG HT
14.20

10.65

7.10

3.55

-5.0 -2.5  0.0  2.5  5.0
DISTORTION (%)

FIG.13A
EX2-POS1

SPHERICAL ABERRATION (mm)

FIG.13B
EX2-POS1

ASTIGMATISM (mm)

FIG.13C
EX2-POS1

DISTORTION (%)

FIG.13D
EX2-POS2

SPHERICAL ABERRATION (mm)

FIG.13E
EX2-POS2

ASTIGMATISM (mm)

FIG.13F
EX2-POS2

DISTORTION (%)

EP 3 015 897 A1

# FIG.14A
EX3-POS1

1.00

0.75

0.50

0.25

-0.50 -0.25 0.0 0.25 0.50
SPHERICAL
ABERRATION (mm)

— - — - · · · 656.28 NM
———— 587.56 NM
—— —— 435.84 NM

# FIG.14B
EX3-POS1

S  T  IMG HT
14.20

10.65

7.10

3.55

-0.50 -0.25 0.0 0.25 0.50
ASTIGMATISM (mm)

# FIG.14C
EX3-POS1

IMG HT
14.20

10.65

7.10

3.55

-5.0 -2.5 0.0 2.5 5.0
DISTORTION (%)

# FIG.14D
EX3-POS2

1.00

0.75

0.50

0.25

-0.50 -0.25 0.0 0.25 0.50
SPHERICAL
ABERRATION (mm)

— - — - · · · 656.28 NM
———— 587.56 NM
—— —— 435.84 NM

# FIG.14E
EX3-POS2

S  T  IMG HT
14.20

10.65

7.10

3.55

-0.50 -0.25 0.0 0.25 0.50
ASTIGMATISM (mm)

# FIG.14F
EX3-POS2

IMG HT
14.20

10.65

7.10

3.55

-5.0 -2.5 0.0 2.5 5.0
DISTORTION (%)

44

# FIG.15A
### EX4-POS1

# FIG.15B
### EX4-POS1

# FIG.15C
### EX4-POS1

SPHERICAL
ABERRATION (mm)

ASTIGMATISM (mm)

DISTORTION (%)

```
-·-·-·-656.28 NM
———587.56 NM
— — —435.84 NM
```

# FIG.15D
### EX4-POS2

# FIG.15E
### EX4-POS2

# FIG.15F
### EX4-POS2

SPHERICAL
ABERRATION (mm)

ASTIGMATISM (mm)

DISTORTION (%)

```
-·-·-·-656.28 NM
———587.56 NM
— — —435.84 NM
```

# FIG.16A
## EX5-POS1

SPHERICAL
ABERRATION (mm)

-0.50 -0.25 0.0 0.25 0.50

1.00
0.75
0.50
0.25

— · — · · 656.28 NM
———— 587.56 NM
— — — 435.84 NM

# FIG.16B
## EX5-POS1

IMG HT
S  T

14.20
10.65
7.10
3.55

-0.50 -0.25 0.0 0.25 0.50
ASTIGMATISM (mm)

# FIG.16C
## EX5-POS1

IMG HT

14.20
10.65
7.10
3.55

-5.0 -2.5 0.0 2.5 5.0
DISTORTION (%)

# FIG.16D
## EX5-POS2

SPHERICAL
ABERRATION (mm)

-0.50 -0.25 0.0 0.25 0.50

1.00
0.75
0.50
0.25

— · — · · 656.28 NM
———— 587.56 NM
— — — 435.84 NM

# FIG.16E
## EX5-POS2

IMG HT
T  S

14.20
10.65
7.10
3.55

-0.50 -0.25 0.0 0.25 0.50
ASTIGMATISM (mm)

# FIG.16F
## EX5-POS2

IMG HT

14.20
10.65
7.10
3.55

-5.0 -2.5 0.0 2.5 5.0
DISTORTION (%)

# FIG.17A
## EX6-POS1

SPHERICAL
ABERRATION (mm)

-0.50 -0.25 0.0 0.25 0.50

1.00
0.75
0.50
0.25

- · - · - · 656.28 NM
———— 587.56 NM
— — 435.84 NM

# FIG.17B
## EX6-POS1

IMG HT

S T 14.20
10.65
7.10
3.55

-0.50 -0.25 0.0 0.25 0.50
ASTIGMATISM (mm)

# FIG.17C
## EX6-POS1

IMG HT
14.20
10.65
7.10
3.55

-5.0 -2.5 0.0 2.5 5.0
DISTORTION (%)

# FIG.17D
## EX6-POS2

SPHERICAL
ABERRATION (mm)

-0.50 -0.25 0.0 0.25 0.50

1.00
0.75
0.50
0.25

- · - · - · 656.28 NM
———— 587.56 NM
— — 435.84 NM

# FIG.17E
## EX6-POS2

IMG HT

T S 14.20
10.65
7.10
3.55

-0.50 -0.25 0.0 0.25 0.50
ASTIGMATISM (mm)

# FIG.17F
## EX6-POS2

IMG HT
14.20
10.65
7.10
3.55

-5.0 -2.5 0.0 2.5 5.0
DISTORTION (%)

47

## FIG.18A
EX7-POS1

## FIG.18B
EX7-POS1

## FIG.18C
EX7-POS1

-0.50 -0.25 0.0 0.25 0.50
SPHERICAL
ABERRATION (mm)

- — · — · · 656.28 NM
- ——— 587.56 NM
- — — 435.84 NM

-0.50 -0.25 0.0 0.25 0.50
ASTIGMATISM (mm)

-5.0 -2.5 0.0 2.5 5.0
DISTORTION (%)

## FIG.18D
EX7-POS2

## FIG.18E
EX7-POS2

## FIG.18F
EX7-POS2

-0.50 -0.25 0.0 0.25 0.50
SPHERICAL
ABERRATION (mm)

- — · — · · 656.28 NM
- ——— 587.56 NM
- — — 435.84 NM

-0.50 -0.25 0.0 0.25 0.50
ASTIGMATISM (mm)

-5.0 -2.5 0.0 2.5 5.0
DISTORTION (%)

# FIG.19A
EX8-POS1

# FIG.19B
EX8-POS1

# FIG.19C
EX8-POS1

SPHERICAL
ABERRATION (mm)

- — · — · — · · 656.28 NM
- ———— 587.56 NM
- — — 435.84 NM

ASTIGMATISM (mm)

DISTORTION (%)

# FIG.19D
EX8-POS2

# FIG.19E
EX8-POS2

# FIG.19F
EX8-POS2

SPHERICAL
ABERRATION (mm)

- — · — · — · · 656.28 NM
- ———— 587.56 NM
- — — 435.84 NM

ASTIGMATISM (mm)

DISTORTION (%)

# FIG.20A
## EX9-POS1

SPHERICAL
ABERRATION (mm)

- ·  —  · · ·656.28 NM
————587.56 NM
———435.84 NM

# FIG.20B
## EX9-POS1

TS  IMG HT

ASTIGMATISM (mm)

# FIG.20C
## EX9-POS1

IMG HT

DISTORTION (%)

# FIG.20D
## EX9-POS2

SPHERICAL
ABERRATION (mm)

- ·  —  · · ·656.28 NM
————587.56 NM
———435.84 NM

# FIG.20E
## EX9-POS2

TS  IMG HT

ASTIGMATISM (mm)

# FIG.20F
## EX9-POS2

IMG HT

DISTORTION (%)

# FIG.21A
## EX10-POS1

1.00
0.75
0.50
0.25

-0.50 -0.25 0.0 0.25 0.50
SPHERICAL
ABERRATION (mm)

| — · — · — · ·656.28 NM |
| ——————587.56 NM |
| —— —— 435.84 NM |

# FIG.21B
## EX10-POS1

S  T  IMG HT
14.20
10.65
7.10
3.55

-0.50 -0.25 0.0 0.25 0.50
ASTIGMATISM (mm)

# FIG.21C
## EX10-POS1

IMG HT
14.20
10.65
7.10
3.55

-5.0 -2.5 0.0 2.5 5.0
DISTORTION (%)

# FIG.21D
## EX10-POS2

1.00
0.75
0.50
0.25

-0.50 -0.25 0.0 0.25 0.50
SPHERICAL
ABERRATION (mm)

| — · — · — · ·656.28 NM |
| ——————587.56 NM |
| —— —— 435.84 NM |

# FIG.21E
## EX10-POS2

S  T  IMG HT
14.20
10.65
7.10
3.55

-0.50 -0.25 0.0 0.25 0.50
ASTIGMATISM (mm)

# FIG.21F
## EX10-POS2

IMG HT
14.20
10.65
7.10
3.55

-5.0 -2.5 0.0 2.5 5.0
DISTORTION (%)

EP 3 015 897 A1

FIG.22A
EX11-POS1

FIG.22B
EX11-POS1

FIG.22C
EX11-POS1

SPHERICAL ABERRATION (mm)

ASTIGMATISM (mm)

DISTORTION (%)

- - · - · · 656.28 NM
—— 587.56 NM
—— 435.84 NM

FIG.22D
EX11-POS2

FIG.22E
EX11-POS2

FIG.22F
EX11-POS2

SPHERICAL ABERRATION (mm)

ASTIGMATISM (mm)

DISTORTION (%)

- - · - · · 656.28 NM
—— 587.56 NM
—— 435.84 NM

52

# FIG.23A

EX1-POS1

# FIG.23E

TANGENTIAL

1.00 RELATIVE
FIELD HEIGHT
( 13.32 )°

SAGITTAL

0.05

0.05

-0.05

-0.05

# FIG.23B

# FIG.23F

0.80 RELATIVE
FIELD HEIGHT
( 10.72 )°

0.05

0.05

-0.05

-0.05

# FIG.23C

# FIG.23G

0.60 RELATIVE
FIELD HEIGHT
( 8.082 )°

0.05

0.05

-0.05

-0.05

# FIG.23D

# FIG.23H

0.00 RELATIVE
FIELD HEIGHT
( 0.000 )°

0.05

0.05

-0.05

-0.05

| | |
|---|---|
| — · — · — · — · | 656.28 NM |
| —————————— | 587.56 NM |
| ——— ——— — | 435.84 NM |

# FIG.24A

EX1-POS2

TANGENTIAL

1.00 RELATIVE
FIELD HEIGHT
( 11.08 )°

0.05

-0.05

# FIG.24E

SAGITTAL

0.05

-0.05

# FIG.24B

0.80 RELATIVE
FIELD HEIGHT
( 8.907 )°

0.05

-0.05

# FIG.24F

0.05

-0.05

# FIG.24C

0.60 RELATIVE
FIELD HEIGHT
( 6.706 )°

0.05

-0.05

# FIG.24G

0.05

-0.05

# FIG.24D

0.00 RELATIVE
FIELD HEIGHT
( 0.000 )°

0.05

-0.05

# FIG.24H

0.05

-0.05

| | |
|---|---|
| — · — · — · — | 656.28 NM |
| ———————— | 587.56 NM |
| —— —— — | 435.84 NM |

## FIG.25A

EX2-POS1

## FIG.25E

TANGENTIAL

1.00 RELATIVE
FIELD HEIGHT
( 13.32 )°

SAGITTAL

## FIG.25B

0.80 RELATIVE
FIELD HEIGHT
( 10.73 )°

## FIG.25F

## FIG.25C

0.60 RELATIVE
FIELD HEIGHT
( 8.086 )°

## FIG.25G

## FIG.25D

0.00 RELATIVE
FIELD HEIGHT
( 0.000 )°

## FIG.25H

— · — · — · — · 656.28 NM
————————— 587.56 NM
———— — ——— 435.84 NM

FIG.26A

EX2-POS2

FIG.26E

TANGENTIAL

1.00 RELATIVE
FIELD HEIGHT
( 11.37 )°

SAGITTAL

0.05

0.05

-0.05

-0.05

FIG.26B

FIG.26F

0.80 RELATIVE
FIELD HEIGHT
( 9.142 )°

0.05

0.05

-0.05

-0.05

FIG.26C

FIG.26G

0.60 RELATIVE
FIELD HEIGHT
( 6.884 )°

0.05

0.05

-0.05

-0.05

FIG.26D

FIG.26H

0.00 RELATIVE
FIELD HEIGHT
( 0.000 )°

0.05

0.05

-0.05

-0.05

| | |
|---|---|
| — · — · — · — · — · | 656.28 NM |
| ——————— | 587.56 NM |
| ——— — ——— — | 435.84 NM |

# FIG.27A

EX3-POS1

# FIG.27E

TANGENTIAL

1.00 RELATIVE
FIELD HEIGHT
( 13.32 )°

SAGITTAL

# FIG.27B

0.80 RELATIVE
FIELD HEIGHT
( 10.73 )°

# FIG.27F

# FIG.27C

0.60 RELATIVE
FIELD HEIGHT
( 8.088 )°

# FIG.27G

# FIG.27D

0.00 RELATIVE
FIELD HEIGHT
( 0.000 )°

# FIG.27H

| | |
|---|---|
| — · — · — · — · | 656.28 NM |
| ————————— | 587.56 NM |
| — — — — — | 435.84 NM |

# FIG.28A

EX3-POS2

TANGENTIAL

1.00 RELATIVE
FIELD HEIGHT
( 11.63 )°

# FIG.28E

SAGITTAL

# FIG.28B

0.80 RELATIVE
FIELD HEIGHT
( 9.355 )°

# FIG.28F

# FIG.28C

0.60 RELATIVE
FIELD HEIGHT
( 7.045 )°

# FIG.28G

# FIG.28D

0.00 RELATIVE
FIELD HEIGHT
( 0.000 )°

# FIG.28H

- - - - - 656.28 NM
——————— 587.56 NM
—— —— — 435.84 NM

# FIG.29A

<u>EX4-POS1</u>

# FIG.29E

TANGENTIAL

1.00 RELATIVE
FIELD HEIGHT
( 13.32 )°

SAGITTAL

0.05

0.05

-0.05

-0.05

# FIG.29B

# FIG.29F

0.80 RELATIVE
FIELD HEIGHT
( 10.72 )°

0.05

0.05

-0.05

-0.05

# FIG.29C

# FIG.29G

0.60 RELATIVE
FIELD HEIGHT
( 8.084 )°

0.05

0.05

-0.05

-0.05

# FIG.29D

# FIG.29H

0.00 RELATIVE
FIELD HEIGHT
( 0.000 )°

0.05

0.05

-0.05

-0.05

| | |
|---|---|
| — · — · — · — · | 656.28 NM |
| ———————— | 587.56 NM |
| ——— ——— — | 435.84 NM |

# FIG.30A

TANGENTIAL

1.00 RELATIVE
FIELD HEIGHT
( 11.63 )°

0.05

-0.05

# FIG.30E

SAGITTAL

0.05

-0.05

# FIG.30B

0.80 RELATIVE
FIELD HEIGHT
( 9.347 )°

0.05

-0.05

# FIG.30F

0.05

-0.05

# FIG.30C

0.60 RELATIVE
FIELD HEIGHT
( 7.037 )°

0.05

-0.05

# FIG.30G

0.05

-0.05

# FIG.30D

0.00 RELATIVE
FIELD HEIGHT
( 0.000 )°

0.05

-0.05

# FIG.30H

0.05

-0.05

| | |
|---|---|
| — · — · — · — · | 656.28 NM |
| ———————— | 587.56 NM |
| —— — —— — | 435.84 NM |

# FIG.31A

EX5-POS1

TANGENTIAL

# FIG.31E

SAGITTAL

1.00 RELATIVE
FIELD HEIGHT
( 13.32 )°

0.05

-0.05

0.05

-0.05

# FIG.31B

# FIG.31F

0.80 RELATIVE
FIELD HEIGHT
( 10.72 )°

0.05

-0.05

0.05

-0.05

# FIG.31C

# FIG.31G

0.60 RELATIVE
FIELD HEIGHT
( 8.083 )°

0.05

-0.05

0.05

-0.05

# FIG.31D

# FIG.31H

0.00 RELATIVE
FIELD HEIGHT
( 0.000 )°

0.05

-0.05

0.05

-0.05

| | |
|---|---|
| — · — · — · — · | 656.28 NM |
| —————————— | 587.56 NM |
| ——— ——— — | 435.84 NM |

# FIG.32A

EX5-POS2

TANGENTIAL

1.00 RELATIVE
FIELD HEIGHT
( 10.29 )°

0.05

-0.05

# FIG.32E

SAGITTAL

0.05

-0.05

# FIG.32B

0.80 RELATIVE
FIELD HEIGHT
( 8.265 )°

0.05

-0.05

# FIG.32F

0.05

-0.05

# FIG.32C

0.60 RELATIVE
FIELD HEIGHT
( 6.217 )°

0.05

-0.05

# FIG.32G

0.05

-0.05

# FIG.32D

0.00 RELATIVE
FIELD HEIGHT
( 0.000 )°

0.05

-0.05

# FIG.32H

0.05

-0.05

— · — · — · — · 656.28 NM
———————— 587.56 NM
— — — — — 435.84 NM

# FIG.33A

EX6-POS1

# FIG.33E

TANGENTIAL

1.00 RELATIVE
FIELD HEIGHT
( 13.31 )°

SAGITTAL

0.05

0.05

-0.05

-0.05

# FIG.33B

# FIG.33F

0.80 RELATIVE
FIELD HEIGHT
( 10.72 )°

0.05

0.05

-0.05

-0.05

# FIG.33C

# FIG.33G

0.60 RELATIVE
FIELD HEIGHT
( 8.082 )°

0.05

0.05

-0.05

-0.05

# FIG.33D

# FIG.33H

0.00 RELATIVE
FIELD HEIGHT
( 0.000 )°

0.05

0.05

-0.05

-0.05

| — · — · — · — · — · | 656.28 NM |
| ———————— | 587.56 NM |
| —— —— — | 435.84 NM |

# FIG.34A

EX6-POS2

TANGENTIAL

1.00 RELATIVE
FIELD HEIGHT
( 10.42 )°

# FIG.34E

SAGITTAL

# FIG.34B

0.80 RELATIVE
FIELD HEIGHT
( 8.368 )°

# FIG.34F

# FIG.34C

0.60 RELATIVE
FIELD HEIGHT
( 6.295 )°

# FIG.34G

# FIG.34D

0.00 RELATIVE
FIELD HEIGHT
( 0.000 )°

# FIG.34H

| | |
|---|---|
| — · — · — · — · — | 656.28 NM |
| ————————— | 587.56 NM |
| — — — — — — | 435.84 NM |

# FIG.35A

TANGENTIAL

EX7-POS1

1.00 RELATIVE
FIELD HEIGHT
( 13.32 )°

0.05

-0.05

# FIG.35E

SAGITTAL

0.05

-0.05

# FIG.35B

0.80 RELATIVE
FIELD HEIGHT
( 10.72 )°

0.05

-0.05

# FIG.35F

0.05

-0.05

# FIG.35C

0.60 RELATIVE
FIELD HEIGHT
( 8.084 )°

0.05

-0.05

# FIG.35G

0.05

-0.05

# FIG.35D

0.00 RELATIVE
FIELD HEIGHT
( 0.000 )°

0.05

-0.05

# FIG.35H

0.05

-0.05

| — · — · — · — · — · | 656.28 NM |
|---|---|
| ——————————— | 587.56 NM |
| ———— ———— — | 435.84 NM |

# FIG.36A

TANGENTIAL

EX7-POS2

SAGITTAL

# FIG.36E

1.00 RELATIVE
FIELD HEIGHT
( 10.21 )°

0.05

0.05

-0.05

-0.05

# FIG.36B

# FIG.36F

0.80 RELATIVE
FIELD HEIGHT
( 8.198 )°

0.05

0.05

-0.05

-0.05

# FIG.36C

# FIG.36G

0.60 RELATIVE
FIELD HEIGHT
( 6.167 )°

0.05

0.05

-0.05

-0.05

# FIG.36D

# FIG.36H

0.00 RELATIVE
FIELD HEIGHT
( 0.000 )°

0.05

0.05

-0.05

-0.05

- · — · · — · · — · 656.28 NM
———————— 587.56 NM
— — — — — 435.84 NM

# FIG.37A

EX8-POS1

# FIG.37E

TANGENTIAL

1.00 RELATIVE
FIELD HEIGHT
( 13.32 )°

SAGITTAL

# FIG.37B

0.80 RELATIVE
FIELD HEIGHT
( 10.72 )°

# FIG.37F

# FIG.37C

0.60 RELATIVE
FIELD HEIGHT
( 8.084 )°

# FIG.37G

# FIG.37D

0.00 RELATIVE
FIELD HEIGHT
( 0.000 )°

# FIG.37H

- · - · - · - · 656.28 NM
——————— 587.56 NM
—— — —— — 435.84 NM

# FIG.38A

EX8-POS2

# FIG.38E

TANGENTIAL

1.00 RELATIVE
FIELD HEIGHT
( 10.30 )°

SAGITTAL

# FIG.38B

# FIG.38F

0.80 RELATIVE
FIELD HEIGHT
( 8.272 )°

# FIG.38C

# FIG.38G

0.60 RELATIVE
FIELD HEIGHT
( 6.222 )°

# FIG.38D

# FIG.38H

0.00 RELATIVE
FIELD HEIGHT
( 0.000 )°

| | |
|---|---|
| — · · — · · — · · — · | 656.28 NM |
| ———————— | 587.56 NM |
| — — — — — | 435.84 NM |

# FIG.39A

EX9-POS1

TANGENTIAL

1.00 RELATIVE
FIELD HEIGHT
( 13.32 )°

0.05

-0.05

# FIG.39E

SAGITTAL

0.05

-0.05

# FIG.39B

0.80 RELATIVE
FIELD HEIGHT
( 10.72 )°

0.05

-0.05

# FIG.39F

0.05

-0.05

# FIG.39C

0.60 RELATIVE
FIELD HEIGHT
( 8.085 )°

0.05

-0.05

# FIG.39G

0.05

-0.05

# FIG.39D

0.00 RELATIVE
FIELD HEIGHT
( 0.000 )°

0.05

-0.05

# FIG.39H

0.05

-0.05

| | |
|---|---|
| — · — · — · — · | 656.28 NM |
| —————————— | 587.56 NM |
| ———  —  — | 435.84 NM |

**FIG.40A**

EX9-POS2

**FIG.40E**

TANGENTIAL — 1.00 RELATIVE FIELD HEIGHT ( 10.09 )° — SAGITTAL

**FIG.40B** — **FIG.40F**

0.80 RELATIVE FIELD HEIGHT ( 8.101 )°

**FIG.40C** — **FIG.40G**

0.60 RELATIVE FIELD HEIGHT ( 6.094 )°

**FIG.40D** — **FIG.40H**

0.00 RELATIVE FIELD HEIGHT ( 0.000 )°

656.28 NM
587.56 NM
435.84 NM

EP 3 015 897 A1

# FIG.41A

EX10-POS1

TANGENTIAL

1.00 RELATIVE
FIELD HEIGHT
( 13.31 )°

0.05

-0.05

# FIG.41E

SAGITTAL

0.05

-0.05

# FIG.41B

0.80 RELATIVE
FIELD HEIGHT
( 10.72 )°

0.05

-0.05

# FIG.41F

0.05

-0.05

# FIG.41C

0.60 RELATIVE
FIELD HEIGHT
( 8.079 )°

0.05

-0.05

# FIG.41G

0.05

-0.05

# FIG.41D

0.00 RELATIVE
FIELD HEIGHT
( 0.000 )°

0.05

-0.05

# FIG.41H

0.05

-0.05

| | |
|---|---|
| — · — · — · — · | 656.28 NM |
| ———————— | 587.56 NM |
| — — — — | 435.84 NM |

71

# FIG.42A

EX10-POS2

TANGENTIAL

SAGITTAL

# FIG.42E

1.00 RELATIVE
FIELD HEIGHT
( 10.09 )°

0.05

-0.05

0.05

-0.05

# FIG.42B

# FIG.42F

0.80 RELATIVE
FIELD HEIGHT
( 8.100 )°

0.05

-0.05

0.05

-0.05

# FIG.42C

# FIG.42G

0.60 RELATIVE
FIELD HEIGHT
( 6.093 )°

0.05

-0.05

0.05

-0.05

# FIG.42D

# FIG.42H

0.00 RELATIVE
FIELD HEIGHT
( 0.000 )°

0.05

-0.05

0.05

-0.05

| | |
|---|---|
| — · — · — · — · | 656.28 NM |
| ———————— | 587.56 NM |
| ——— ——— — | 435.84 NM |

# FIG.43A

EX11-POS1

# FIG.43E

TANGENTIAL

1.00 RELATIVE
FIELD HEIGHT
( 13.32 )°

SAGITTAL

# FIG.43B

0.80 RELATIVE
FIELD HEIGHT
( 10.72 )°

# FIG.43F

# FIG.43C

0.60 RELATIVE
FIELD HEIGHT
( 8.083 )°

# FIG.43G

# FIG.43D

0.00 RELATIVE
FIELD HEIGHT
( 0.000 )°

# FIG.43H

| | |
|---|---|
| — · — · — · — · | 656.28 NM |
| ———————— | 587.56 NM |
| — — — — — | 435.84 NM |

# FIG.44A

EX11-POS2

TANGENTIAL

1.00 RELATIVE
FIELD HEIGHT
( 9.839 )°
°

0.05

-0.05

# FIG.44E

SAGITTAL

0.05

-0.05

# FIG.44B

0.80 RELATIVE
FIELD HEIGHT
( 7.899 )°

0.05

-0.05

# FIG.44F

0.05

-0.05

# FIG.44C

0.60 RELATIVE
FIELD HEIGHT
( 5.941 )°

0.05

-0.05

# FIG.44G

0.05

-0.05

# FIG.44D

0.00 RELATIVE
FIELD HEIGHT
( 0.000 )°

0.05

-0.05

# FIG.44H

0.05

-0.05

| | |
|---|---|
| — · — · — · — · — · | 656.28 NM |
| —————————— | 587.56 NM |
| — — — — — | 435.84 NM |

FIG.45

Europäisches
Patentamt

European
Patent Office

Office européen
des brevets

# EUROPEAN SEARCH REPORT

Application Number

EP 15 19 0565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/141629 A1 (YOSHINAGA SHUNICHIRO [JP] ET AL) 6 June 2013 (2013-06-06) * figures 1-21 * | 1-9 | INV. G02B13/24 |
| X | EP 2 555 034 A1 (KONICA MINOLTA ADVANCED LAYERS [JP]) 6 February 2013 (2013-02-06) * figures 1-8 * | 1-9 | |
| X | JP 2013 186458 A (OLYMPUS IMAGING CORP) 19 September 2013 (2013-09-19) * figures 1-5,11-14 * | 1-9 | |
| X | US 2013/271851 A1 (SOUMA YOSHIHITO [JP]) 17 October 2013 (2013-10-17) * figures 8-12 * | 1-9 | |

TECHNICAL FIELDS
SEARCHED (IPC)

G02B

The present search report has been drawn up for all claims

| Place of search | Date of completion of the search | Examiner |
|---|---|---|
| Munich | 23 February 2016 | Daffner, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 19 0565

This annex lists the patent family members relating to the patent documents cited in  the above-mentioned European search report.
The members are as contained in the European Patent Office EDP file on
The European Patent Office is in no way liable for these particulars which are merely given for the purpose of information.

23-02-2016

| Patent document cited in search report | | Publication date | Patent family member(s) | | Publication date |
|---|---|---|---|---|---|
| US 2013141629 | A1 | 06-06-2013 | JP | 5830638 B2 | 09-12-2015 |
| | | | US | 2013141629 A1 | 06-06-2013 |
| | | | WO | 2012026069 A1 | 01-03-2012 |
| EP 2555034 | A1 | 06-02-2013 | CN | 102804021 A | 28-11-2012 |
| | | | EP | 2555034 A1 | 06-02-2013 |
| | | | JP | 5397538 B2 | 22-01-2014 |
| | | | KR | 20120135273 A | 12-12-2012 |
| | | | US | 2013016261 A1 | 17-01-2013 |
| | | | WO | 2011118555 A1 | 29-09-2011 |
| JP 2013186458 | A | 19-09-2013 | JP | 5846973 B2 | 20-01-2016 |
| | | | JP | 2013186458 A | 19-09-2013 |
| US 2013271851 | A1 | 17-10-2013 | JP | 2013235239 A | 21-11-2013 |
| | | | US | 2013271851 A1 | 17-10-2013 |

EPO FORM P0459

For more details about this annex : see Official Journal of the European Patent Office, No. 12/82

**EP 3 015 897 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011180226 A
- JP 2008257088 A
- JP 2011048232 A